(19) Europäisches Patentamt / European Patent Office / Office européen des brevets

(11) EP 2 851 349 B1

(12) # EUROPÄISCHE PATENTSCHRIFT

(45) Veröffentlichungstag und Bekanntmachung des Hinweises auf die Patenterteilung:
**01.03.2017 Patentblatt 2017/09**

(21) Anmeldenummer: **14185797.9**

(22) Anmeldetag: **22.09.2014**

(51) Int Cl.:
***C03C 25/40*** *(2006.01)* ***C07D 213/22*** *(2006.01)*
***C07F 7/18*** *(2006.01)* ***C08G 77/58*** *(2006.01)*
***C08G 79/00*** *(2006.01)* ***C08F 230/08*** *(2006.01)*
***C08G 77/20*** *(2006.01)* ***C08G 77/22*** *(2006.01)*
***C08K 9/06*** *(2006.01)* ***E06B 9/24*** *(2006.01)*
***G02F 1/15*** *(2006.01)* ***C09K 11/06*** *(2006.01)*
***C09K 9/02*** *(2006.01)* ***C07F 15/02*** *(2006.01)*
***C08K 3/10*** *(2006.01)* ***C08K 5/00*** *(2006.01)*
***C08L 43/04*** *(2006.01)* ***C08L 83/08*** *(2006.01)*
***C08G 77/26*** *(2006.01)*

(54) **Elektrochrome Materialien mit verbesserter Temperaturstabilität**

Electrochromic materials with improved temperature stability

Matériaux électrochromes ayant une stabilité de température améliorée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2013 DE 102013110582**

(43) Veröffentlichungstag der Anmeldung:
**25.03.2015 Patentblatt 2015/13**

(73) Patentinhaber:
- **Fraunhofer-Gesellschaft zur Förderung der angewandten Forschung e.V.**
  **80686 München (DE)**
- **Julius-Maximilians-Universität Würzburg**
  **97070 Würzburg (DE)**

(72) Erfinder:
- **Wolter, Herbert**
  **97941 Tauberbischofsheim (DE)**
- **Somchith, Nique**
  **97249 Eisingen (DE)**
- **Schott, Marco**
  **97753 Karlstadt (DE)**

(74) Vertreter: **Strehl Schübel-Hopf & Partner**
**Maximilianstrasse 54**
**80538 München (DE)**

(56) Entgegenhaltungen:
**EP-A1- 2 444 839 WO-A1-2006/111352**
**DE-C1- 4 416 857**

- **CHEN WEI-HAN ET AL: "An electrochromic device composed of metallo-supramolecular polyelectrolyte containing Cu(I) and polyaniline-carbon nanotube", SOLAR ENERGY MATERIALS AND SOLAR CELLS, Bd. 126, 29. August 2013 (2013-08-29), Seiten 219-226, XP028851352, ISSN: 0927-0248, DOI: 10.1016/J.SOLMAT.2013.07.038**
- **ALLCOCK H R: "INORGANIC-ORGANIC POLYMERS", ADVANCED MATERIALS, WILEY - V C H VERLAG GMBH & CO. KGAA, DE, Bd. 6, Nr. 2, 1. Februar 1994 (1994-02-01) , Seiten 106-115, XP000423044, ISSN: 0935-9648, DOI: 10.1002/ADMA.19940060203**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft elektrochrome Materialien, die sich für die Herstellung der Arbeitselektrode einer elektrochromen Zelle eignen. Die Arbeitselektrode besteht aus einer Schicht, die eine oder mehrere gelöste Metall-Komplexverbindungen sowie ein Einbettungsmaterial aufweist und im Gegensatz zu Schichten, die ausschließlich aus Lösungen dieser Metall-Komplexverbindung(en) bestehen, auch bei erhöhten Temperaturen langzeitstabil ist und keine Tendenz zeigt, sich im benachbarten Elektrolyten aufzulösen. Die Schicht besitzt darüber hinaus einen verbesserten Memory-Effekt.

Elektrochrome Zellen können fünfschichtig aufgebaut sein, mit einer ersten, mit einem transparenten Leiter beschichteten transparenten Scheibe oder einem solchen Film, auf die/den eine elektrochrome Schicht oder eine Schicht, die Ionen einlagern kann, aufgebracht ist. Über einen ionenleitenden Elektrolyten ist dieses Konstrukt mit einer zweiten, ebenfalls mit einem transparenten Leiter beschichteten und gegebenenfalls mit einer zweiten Gegenelektrode versehenen, transparenten Scheibe oder einem solchen Film verbunden. Die beiden transparenten Leitschichten sind in einen Schaltkreis integriert. Wird über diesen Schaltkreis der transparente Leiter der ersten Scheibe oder des ersten Films als Anode, der andere als Kathode geschaltet, wandern Ionen von der elektrochromen Schicht, die sich auf der ersten Scheibe oder Schicht befindet, durch den Elektrolyten zur Gegenelektrode bzw. zum transparenten Leiter der zweiten Scheibe oder Schicht. Wenn die Zellen nicht für ein elektrochromes Fenster, sondern für eine andere Anwendung wie z.B. sog. "e-paper" vorgesehen ist, muss nur eine(r) der beiden Scheiben oder Filme transparent sein.

Als Material für eine funktionell schaltbare Schicht für elektrochrome Fenster hat sich bislang nur $WO_3$ etabliert. Das farblose $WO_3$ wird durch elektrochemische Reduktion und bei gleichzeitigem Einbau eines ladungsneutralisierenden Kations M (wie $H^+$, $Li^+$ oder $K^+$) blau gefärbt. Der Vorgang ist reversibel:

$$\underset{\text{farblos}}{WO_3 + x\cdot e^- + x\cdot M^+} \leftrightarrow \underset{\text{blau}}{M_xWO_3}$$

Weitere Übergangsmetalloxidverbindungen, die elektrochrome Effekte zeigen und in Prototypen schon zum Einsatz gekommen sind, sind z.B. $IrO_2$, $MnO_2$, $MoO_3$, NiO, $Nb_2O_5$. Vor allem $IrO_2$ und NiO sind zwei Kandidaten mit guten optischen und elektrochemischen Eigenschaften.

S. Heusing et al. beschreiben in Thin Solid Films 502, 240-245 (2006) elektrochrome Schichten, die mit der Sol-Gel-Technik hergestellt werden können. Damit ist es auch möglich, gebogene EC-Fenster herzustellen, was für die Anwendung im Automobilbereich (z.B. als Sonnendächer) von Bedeutung ist. A. Kraft et al. stellen in Solar Energy Materials and Solar Cells 90, 469-476 (2006) elektrochrome Gebäudeverglasungen vor, für die $WO_3$ und Preußisch Blau als elektrochrome Schichten für die Arbeits- und Gegenelektrode eingesetzt werden. Als Polymerelektrolyt dient dabei eine ionenleitende Polyvinylbutyralfolie.

R. Beatens et al. geben in Solar Energy Materials & Solar Cells 94, 87-105 (2010) eine Übersicht über die Eigenschaften, Anforderungen und Möglichkeiten intelligenter Fenster für dynamische Tageslicht- und Solarenergie-Kontrolle in Gebäuden. Darin werden auch organische elektrochrome Polymermaterialien erwähnt wie Polyanilin und Poly(3,4-ethylendioxythiophen), sowie in jüngerer Zeit daraus entwickelte Abwandlungen dieser Materialien. Diese werden in der Regel als Gegenelektrode zu $WO_3$ eingesetzt.

In EP 2 444 839 A1 wird eine Display-Anordnung beschrieben, die als farbiges "elektronisches Papier" (sog. e-paper) eingesetzt werden kann. Zwischen zwei mit einer Oberflächenelektrode (z.B. ITO) beschichteten Substrat-Platten oder-Folien, deren eine transparent sein muss, wird eine strukturierte Arbeitselektrode aus einem Hybridpolymer mit Bis(terpyridin)-Resten, die Metallionen chelatisieren können, und neutralisierenden, meist organischen Anionen und ein Polymer-Gelelektrolyt eingebracht. Die ITO-Elektroden des transparenten Substrats dient nicht nur als leitfähiges Material, um den Stromfluss zur Arbeitselektrode zu ermöglichen, sondern auch als Gegenelektrode zur Arbeitselektrode. Eine ähnliche Vorrichtung offenbart EP 2 105 787 A. Hier kann das Papier schwarze, weiße und farbige Bereiche anzeigen. In US 2009/270589 A1 werden verschiedenste Terpyridin-Polyelektrolyte beschrieben, die leicht zwischen einem farbigen und einem farblosen Zustand hin- und hergeschaltet werden können und sich aufgrund ihrer Elektrochromie für lichtemittierende Vorrichtungen, energiekonvertierende Materialien, Medikamentenabgabesysteme, Sensoren, Hochleistungskatalysatoren, Solarbatterien und dergleichen eignen sollen. Weitere als elektrochromes Material einsetzbare Bis(terpyridin)-Chelatliganden sind aus WO 2008/081762 A1 und WO 2008/143324 A1 bekannt. Letztere Druckschrift offenbart organische Verbindungen, bei denen zwei Terpyridyl-Reste über einen Spacer kovalent miteinander verbunden sind und Übergangsmetallionen komplexieren können, zur Anwendung in elektronischen Papieren. Diese Verbindungen werden auch als "Hybridpolymer" bezeichnet.

Auch in WO 2011/096386 A1 werden derartige Terpyridin-Chelatliganden, ihre Herstellung sowie ihre Verwendung als elektrochromes Material für intelligente Fenster beschrieben. Hierfür wird eine Schicht, die das Hybridpolymer enthält, zwischen zwei elektrisch leitfähigen Platten, z.B. ITO-beschichteten Glasplatten, angeordnet. Der zu verwendende Elektrolyt wird z.B. als $LiClO_4$-Gel jeweils auf das Hybridpolymer und die andere ITO-Glas-Platte aufgetragen, und die beiden Glas-Platten werden mit den mit Elektrolyt beschichteten Seiten zueinander zusammengebracht. Als Stromlieferant wird u.a. eine Solarzelle vorgeschlagen.

Die in den vorgenannten Veröffentlichungen offenbarten Metall-Komplexverbindungen können allgemein dadurch charakterisiert werden, dass sie in der Lage sind, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht.

Es lässt sich allerdings zeigen, dass die in WO 2011/096386 vorgeschlagene Konstruktion keinerlei Schaltstabilität besitzt, weil die als Gegenelektrode und als Ableiter verwendete ITO-Schicht nicht in der Lage ist, die beim Anlegen einer Spannung anfallende Ladungsmenge, die bei der Konversion der Eisenionen von $Fe^{2+}$ (blau) zu $Fe^{3+}$ (farblos) entsteht und in Form von Lithiumionen durch den Elektrolyten transportiert wird und in Form von Lithiumatomen in die Schicht interkaliert werden muss, reversibel und vollständig einzulagern. Die am selben Tag wie die vorliegende Anmeldung eingereichte Parallelanmeldung "Elektrochrome Zellen" derselben Anmelderin schlägt als Abhilfe hierfür die Verwendung einer zusätzlichen zweiten Elektrode als Gegenelektrode vor, die auf der leitfähigen Beschichtung des zweiten Substrats angeordnet ist und so konfiguriert ist, dass sie die entsprechende Ladungsmenge aufnehmen kann. Ein Beispiel hierfür ist Titan-Vanadium-Oxid. Bei Raumtemperatur lassen sich Zellen, die mit dem Bis(terpyridin)-Chelatliganden der WO 2008/081762 komplexiertes Eisen als das Material der Arbeitselektrode und Lithiumtitanat als das Material der Gegenelektrode enthalten, über mehr als 10,000 Zyklen hinweg stabil an- und abschalten. Sobald jedoch die Temperatur des Systems 60°C überschreitet, sinkt die Schaltstabilität enorm, und es lässt sich ein langsames Eindringen des Metall-Chelatkomplexes in den Elektrolyten beobachten.

Es ist Aufgabe der Erfindung, ein Material für eine Arbeitselektrode bereitzustellen, die in einer elektrochromen Zelle mit einem bewegliche Kationen enthaltenden Elektrolyten eingesetzt werden kann und eine oder mehrere Metall-Komplexverbindungen aufweist, die in der Lage ist/sind, eine Redoxreaktion einzugehen, wobei der Übergang vom oxidierten in den reduzierten Zustand und umgekehrt mit einer Farbvertiefung bzw. Farbabschwächung einhergeht, das auch bei höheren Temperaturen langzeitstabil ist, d.h. über mehrere tausend Zyklen geschaltet werden kann, ohne dass sich der Farbhub der Redox-Reaktion der Metall-Komplexverbindung(en) wesentlich ändert.

Die Lösung der Aufgabe liegt in der Erkenntnis, dass die Haftung derartiger Materialien auf der leitfähigen Beschichtung des Substrats verbessert und ein Auflösen in dem verwendeten Elektrolytmaterial verhindert werden muss. Erfindungsgemäß wird deshalb ein Material für die Arbeitselektrode einer elektrochromen Zelle bereitgestellt, umfassend mindestens eine Metall-Komplexverbindung wie vorstehend definiert sowie ein transparentes Einbettungsmaterial. Das Einbettungsmaterial fungiert dabei als Matrix für die Komplex-Verbindung(en). Dabei ist es wichtig, dass die Matrix derart optimiert ist, dass trotz der relativ guten Löslichkeit des oder der Metall-Komplexe im Lösungsmittel dennoch eine ausreichende Fixierung der Metall-Ionen gewährleistet ist. Dies gelingt dadurch, dass das Einbettungsmaterial sowohl Hydroxygruppen als auch organisch polymerisierbare C=C-Doppelbindungen aufweist. In einer ersten Ausführungsform wird dies dadurch realisiert, dass das Einbettungsmaterial Einheiten aufweist, die mit mindestens einer Hydroxygruppe sowie mindestens einem Substituenten substituiert sind, der seinerseits mindestens eine organisch polymerisierbare C=C-Doppelbindung aufweist. Bei diesen Einheiten handelt es sich vorzugsweise entweder um über Kohlenstoff an Siliciumatome gebundene Reste eines organisch modifizierten Kieselsäure(hetero)polykondensats und/oder um die Monomereinheit einer organischen Verbindung, im Falle einer rein organischen monomeren Verbindung also um die Verbindung als solche, während im Falle einer polymeren Verbindung jede Monomereinheit darin die genannten zwei Substituenten aufweisen muss. In einer zweiten Ausführungsform weist das Einbettungsmaterial ein Gemisch aus mindestens zwei verschiedenen Einheiten auf, wobei eine erste Einheiten mit mindestens einer Hydroxygruppe substituiert ist und eine zweite Einheiten mit mindestens einem Substituenten substituiert ist, der seinerseits mindestens eine organisch polymerisierbare C=C-Doppelbindung aufweist. In dieser Ausführungsform handelt es sich bei den genannten Einheiten um unterschiedliche, über Kohlenstoff an Siliciumatome gebundene Reste eines organisch modifizierten Kieselsäure(hetero)polykondensats oder um ein Gemisch aus mindestens zwei rein organischen, monomeren oder polymeren Verbindungen, wobei die erste Verbindung mit mindestens einer Hydroxygruppe substituiert ist und die zweite Verbindung mindestens eine organisch polymerisierbare C=C-Doppelbindung trägt, oder um eine polymere Verbindung mit mindestens zwei unterschiedlichen (Monomer-)Einheiten, wobei die ersten Einheit mit mindestens einer Hydroxygruppe substituiert ist und die zweite Einheit mindestens eine organisch polymerisierbare C=C-Doppelbindung trägt.

Kombinationen von innerhalb der einzelnen Ausführungsformen genannten Varianten sowie von Varianten der ersten und der zweiten Ausführungsform sind selbstverständlich ebenfalls möglich, d.h. beispielsweise die Kombination eines Kieselsäure(hetero)polykondensats mit einer oder mehreren rein organischen Verbindung(en).

Im Sinne der Erfindung besitzt ein Material, das als "polymer" bezeichnet wird, mehr als eine Monomereinheit und umfasst damit auch sogenannte Oligomere.

Das Einbettungsmaterial kann, muss aber nicht, weitere Komponenten enthalten, die vorzugsweise nicht mehr als 30 Gew.-%, stärker bevorzugt nicht mehr als 15 Gew.-% des gesamten Einbettungsmaterials ausmachen. Diese

Komponenten können, müssen aber nicht, weitere reaktive Gruppen tragen; allerdings ist es bevorzugt, dass sie keine freien Carbonsäuregruppen aufweisen. Auch die vorstehend definierten Einheiten können bei Bedarf weitere reaktive Substituenten oder Gruppen, mit Ausnahme von Carbonsäuregruppen, enthalten; dies ist jedoch nur in Ausnahmefällen günstig.

In vielen Ausführungsformen der Erfindung, insbesondere bei Verwendung rein organischer Verbindungen als Einbettungsmaterial, enthalten die genannten Einheiten keine weiteren reaktiven Substituenten. In einer Reihe von Ausführungsformen der Erfindung, insbesondere bei Verwendung rein organischer Verbindungen als Einbettungsmaterial, enthalten die eingesetzten Verbindungen bzw. Kieselsäure(hetero)polykondensate keine weiteren reaktiven Substituenten.

Bei den organisch polymerisierbaren C=C-Doppelbindungen handelt es sich um solche, die durch eine sogenannte Additionspolymerisation polymerisierbar sind, vorzugsweise um Acryl- oder Methacrylgruppen, z.B. um die entsprechenden (Meth)Acrylate, Thio-(Meth)Acrylate oder (Meth)Acrylamide.

Organisch modifizierte Kieselsäure(hetero)polykondensate sind auch bekannt unter der geschützten Bezeichnung ORMOCER®e; sie werden aus oder unter Verwendung von hydrolysierbaren und kondensierbaren Silanen hergestellt, die über Kohlenstoff an das Silicium gebundene Gruppen tragen. Diese Gruppen sind erfindungsgemäß zumindest teilweise mit den oben genannten Substituenten modifiziert; es können aber weiterhin auch Alkylreste oder dergleichen vorhanden sein, die beliebige andere Substituenten aufweisen können. Der in Klammern gesetzte Zusatz "(hetero)" im Polykondensat bezieht sich auf die Möglichkeit, dass dessen anorganisches Netzwerk nicht nur Silicium, sondern weitere Heteroatome aufweist, z.B. Metallatome wie Al, Zn oder Zr. Dies alles ist aus dem Stand der Technik gut bekannt.

Als Lösungsmittel für beide Komponenten, die Metall-Komplexverbindung(en) und das Einbettungsmaterial, dient ein polares Lösungsmittel. Vorzugsweise werden Wasser, ein $C_1$-$C_6$-Alkohol wie Methanol oder Ethanol oder ein Gemisch aus mindestens zwei der genannten Lösungsmittel, möglicherweise mit Zusatz eines hochsiedenden Lösungsmittels (mit einem Siedepunkt von vorzugsweise über 100°C, z.B. 2-Butoxyethanol), vorzugsweise ein Alkohol-Wasser-Gemisch wie ein Gemisch aus Ethanol und Wasser und ganz besonders bevorzugt Ethanol oder ein Ethanol-Methanol-Gemisch verwendet.

Das Vorhandensein von OH-Gruppen im Einbettungsmaterial verleiht diesem eine geeignete Polarität, die z.B. dafür sorgt, dass sich das Einbettungsmaterial gut im Lösungsmittel für die Metall-Komplexverbindung löst. Außerdem wirken sie sich wahrscheinlich günstig auf die Benetzung des Substrats und an die Haftung des Einbettungsmaterials daran aus. Im Übrigen bewirkt das Vorhandensein der organischen, C=C-Doppelbindungen enthaltenden Gruppen, dass die Arbeitselektrode sehr flexibel bleibt, und zwar auch in den Fällen, in denen das Einbettungsmaterial aus einem Kieselsäure(hetero)polykondensat besteht oder ein solches enthält und damit relativ starre Si-O-Si-Gruppierungen aufweist.

Die Menge des Einbettungsmaterials in der Arbeitselektrode wird in der Regel so gewählt, dass im Lösungsmittel ein Molverhältnis der Komplexverbindung zu Einbettungsmaterial von 10:1 bis 1:40, vorzugsweise 1:1 bis 1:40 und besonders bevorzugt von ca. 1,5:1 bis 1:4 vorliegt.

Durch die Einbettung des oder der Metall-Komplexverbindung(en) in das Einbettungsmaterial wird deren Haftung und damit Verbleib in der Arbeitselektroden-Schicht überraschend stark verbessert mit der Folge, dass die elektrochrome Zelle auch bei Temperaturen oberhalb von 60°C über eine große Anzahl von Zyklen hinweg stabil geschaltet werden kann, ohne dass der Farbhub erkennbar abnimmt.

Die aus den erfindungsgemäßen Komponenten gebildete bzw. diese umfassende Arbeitselektrode kann vorzugsweise in eine elektrochemische Zelle integriert werden, die die folgenden Komponenten aufweist: Ein erstes Substrat und ein zweites, transparentes Substrat, die jeweils mit einer leitenden Beschichtung versehen sind, wobei die Arbeitselektrode in Kontakt mit der leitenden Beschichtung eines dieser beiden Substrate steht, und ein Elektrolytmaterial, das sich zwischen der Arbeitselektrode und dem anderen Substrat befindet und bewegliche Kationen, beispielsweise in Form eines dissoziierbaren Metallsalzes, enthält, wobei sich zwischen dem Elektrolytmaterial und der leitenden Beschichtung des anderen Substrats vorzugsweise eine zweite Elektrode befindet, die in der Lage ist, Kationen des Elektrolytmaterials zu interkalieren und/oder eine Redoxreaktion einzugehen.

Besonders bevorzugt unterliegt das Material der zweiten Elektrode beim Übergang vom oxidierten in den reduzierten Zustand keiner Farbvertiefung im Wellenlängenbereich der Farbvertiefung der Metall-Komplexverbindung und vorzugsweise gar keiner Farbvertiefung.

Wenn das Material der zweiten Elektrode einer Farbvertiefung beim Übergang vom reduzierten in den oxidierten Zustand unterliegen soll, damit sich beim An- und Abschalten der Zelle die Farbvertiefungen beider Elektroden addieren, lässt sich beispielsweise Preußisch-Blau als Material für die zweite Elektrode einsetzen (siehe **Figur 11).** Wenn das Material der zweiten Elektrode farbneutral sein soll, kann ein Titan-Vanadium-Oxid das Material der Wahl für diese Elektrode sein (siehe **Figur 12).**

In einer weiteren bevorzugten Ausführungsform, die mit allen anderen Ausführungsformen der Erfindung kombinierbar ist, besitzt die zweite Elektrode eine Speicherkapazität, die mindestens der Speicherkapazität der Arbeitselektrode entspricht und vorzugsweise um mindestens 10% über der Speicherkapazität der Arbeitselektrode liegt.

In einer ebenfalls bevorzugten Ausführungsform, die sich mit allen anderen Ausführungsformen dieser Erfindung kombinieren lässt, ist auch das zweite Substrat transparent. Die Zelle kann dann z.B. als elektrochromes Fenster genutzt werden.

Der erfindungsgemäße Zellaufbau ist zusammen mit der Verschaltung in **Figur 1** schematisch vor und nach dem Zusammenfügen dargestellt.

Als Substrate für die erfindungsgemäßen elektrochromen Zellen können starre oder flexible, jeweils nach Bedarf lichtdurchlässige Scheiben oder Folien dienen, beispielsweise transparente, farblose oder ggf. auch gefärbte Gläser oder Polymer-Folien, beispielsweise aus Polyethylenterephthalat (PET) oder Acryl ("Acrylglas").

Die Substrate sind mit einer gängigen transparenten, leitfähigen Beschichtung versehen, beispielsweise einem Oxid wie ITO ($In_2O_3$:$SnO_2$), FTO ($SnO_2$:F), ATO ($SnO_2$:Sb) oder AZO (ZnOAl). Diese können z.B. durch Sputtern aufgebracht sein (das gilt vor allem für ITO und FTO; AZO lässt sich aber beispielsweise auch durch Sol-Gel-Technik als dünne Schicht auf dem Glassubstrat abscheiden). Die Dicke der Schichten ist nicht kritisch und liegt für ITO üblicherweise bei 130 nm, für FTO üblicherweise bei 300 nm. Teilweise sind derart beschichtete Substrate im Handel erhältlich. Die transparente leitfähige Schicht dient zur Stromversorgung (als Ableiter) der beiden Elektroden; jede von ihnen wird an eine Spannungsquelle in einem Stromkreis angeschlossen.

Auf das eine der beiden beschichteten Substrate wird eine Lösung der für die Arbeitselektrode vorgesehenen Kombination aus Metall-Komplexverbindung und Einbettungsmaterial in einem der vorgenannten Lösungsmittel aufgebracht. Für den Auftrag können unterschiedliche nasschemische Beschichtungsverfahren eingesetzt werden, je nach Bedarf und Substratbeschaffenheit zum Beispiel Tauchbeschichtung (Dip-coating), Schleuderbeschichtung (Spin-coating), Drop-coating, Rakeln, Sprühbeschichtung, Fluten, Roller-coating, Tampondruck oder Layer-by-Layer-Verfahren.

Je nach Konzentration der Metall-Komplexverbindung und des Einbettungsmaterials kann die Schichtdicke der Arbeitselektrode variiert werden. Eine Konzentration an Metall-Komplexverbindung im Bereich von 5 bis 100 mM hat sich als vorteilhaft herausgestellt; vorzugsweise werden Konzentrationen im Bereich von 10 bis 40 mM, teilweise auch etwas mehr als ca. 50 mM eingesetzt, was insbesondere für das nachstehend näher beschriebene Fe-MEPE gilt. Die Dicke der Schicht kann dann z.B. im Bereich von etwa 5 bis 8000 nm, vorzugsweise von etwa 50 bis etwa 1000 nm liegen, wobei Bereiche von etwa 100 bis 500 nm besonders bevorzugt sind.

Auf die leitende Beschichtung der zweiten Substratplatte wird zunächst das Material der zweiten Elektrode schichtförmig aufgetragen.

Sodann wird die Elektrolytschicht entweder auf die als Arbeitselektrode dienende Schicht oder auf die zweite Elektrodenschicht aufgetragen. Bei Bedarf erfolgt der Auftrag auch beidseits. Schließlich werden die beiden Substratplatten so zueinander orientiert, dass die Elektrolyt-/ Elektrodenschichten zueinander zeigen, aufeinander aufgelegt und miteinander verbunden. Dieser Randbereich wird anschließend luftdicht verklebt (z.B. mit PUR- oder Epoxid-Kleber). Alternativ kann die Abdichtung mit Hilfe einer flexiblen Kunststoff-Dichtung, einer Butylgummischnur, einem Rahmen oder dergleichen bewerkstelligt werden.

Eine Vielzahl von Komplexverbindungen mit verschiedenen Übergangsmetallionen eignet sich als erfindungsgemäß einsetzbare Metall-Komplexverbindung, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht, die also die wünschenswerten elektrochromen Eigenschaften aufweist. In günstiger Weise handelt es sich dabei um Verbindungen mit chelatisierenden Komplexliganden, die Metallatome z.B. über zwei oder mehr Stickstoff-, Sauerstoff- oder Schwefelatome binden können. Besonders bevorzugt ist die Verwendung von Liganden, die zwei oder, vorzugsweise, drei bindungsfähige Stickstoffatome mit verfügbarem Elektronenpaar enthalten, beispielsweise eingebunden in entsprechende aromatische Heteroringe wie Pyridin, Pyrimidin, Indolizin, Imidazol, Pyrazol, Oxazol, Isoxazol, Thiazol oder Isothiazol sowie deren Benzokondensate wie Benzimidazol oder Benzoxazol. Diese können beliebig kombiniert werden, beispielsweise zu den Liganden Bis-(benzimidazolyl)pyridin, Bis-(benzoxazolyl)pyridin, in denen u.a. der Pyridin-Rest entweder unsubstituiert bleibt oder beliebig, z.B. mit OH oder Halogen, substituiert sein kann, oder zu einem optional, z.B. mit Halogen, Alkyl oder Aminophenyl, substituierten Terpyridin. Über die Variabilität dieser Liganden lässt sich eine breite Farbpalette erhalten. Die prinzipiell komplexierbaren Metallkationen sind in der Regel Übergangsmetallkationen, sie werden für die vorliegende Erfindung vorteilhaft in Hinblick auf ihr Redoxpotential ausgewählt, wie weiter unten genauer dargestellt.

Beispiele für Metallkomplexe mit dem Chelatliganden Bis(benzimidazol-2-yl)pyridin-Rest sind Fe-(2,6-Bis(benzimidazol-2-yl)-pyridin)$_2$ (bbip (X=H)) und Fe-(2,6-Bis(benzimidazol-2-yl)-4-hydroxypyridin)$_2$ (bbip (X=OH)), Beispiele für Metallkomplexe mit Terpyridyl-Liganden sind Fe-(4'-chloro-2,2':6',2"-terpyridin)$_2$ und Fe-(4'-(4-aminophenyl)-2,2':6',2"-terpyridin)$_2$.

Die Arbeitselektrode kann mehrere chelatisierende Komplexliganden aufweisen. So können die voranstehend erwähnten Metallkomplexe mit dem Chelatliganden Bis(benzimidazol-2-yl)pyridin-Rest auch miteinander kombiniert werden, um besondere Farbeffekte oder eine Grau- oder Brauntönung zu erzielen.

In einer spezifischen Ausführungsform kann der Komplexligand zwei Terpyridylgruppen aufweisen, die über

eine Einfachbindung oder einen Spacer miteinander verbunden sind. Der Vorteil dieser Liganden liegt darin, dass sie beidseitig Metallatome komplexieren können, wobei die Metallatome ihrerseits von zwei Terpyridyl-Gruppen umgeben sein können, sodass eine Art Kettenpolymer entsteht. Solche Terpyridin-Liganden sind aus der Literatur bekannt (siehe z.B. US 2009/0270589, EP 2 444 839 A1, WO 2008/143324 A1 oder E.C. Constable et al., J. Chem. Soc. Dalton Trans. 1992, 3467-3475); sie können polymerartige Koordinationsverbindungen mit den oben erwähnten Metallionen, insbesondere mit Fe, Co, Ni, Zn oder Ru eingehen, wie anhand des nachstehenden Terpyridin-Komplexes gezeigt:

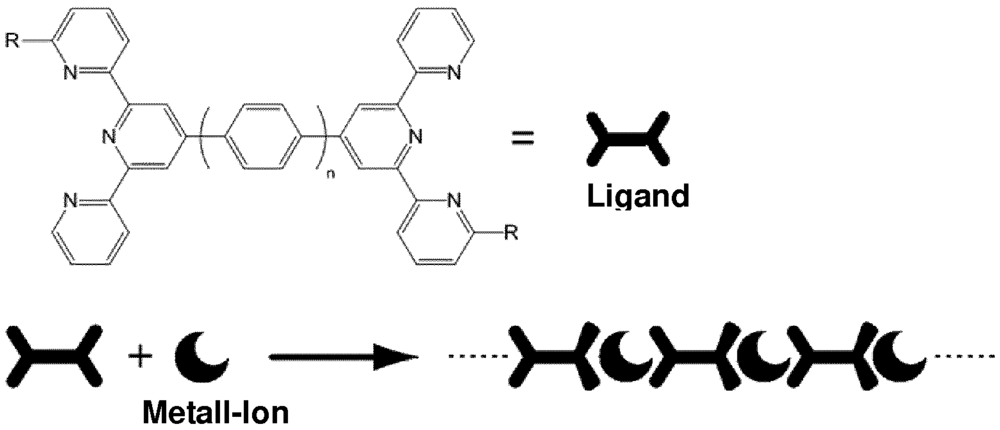


Die Gruppe dieser Komplexe ist unter dem Namen MEPE bekannt. Die MEPEs sind in wässrigen und alkoholischen Medien löslich und luft- und hydrolysestabil. Durch geeignete Auswahl an Liganden und Metall-Ionen lassen sich die optischen und elektrochemischen Eigenschaften variieren. Die Einfärbeeffizienz, also die Differenz zwischen der Absorption im reduzierten und der Absorption im oxidierten Zustand des entsprechenden Materials in Abhängigkeit von der für die Farbänderung benötigten Ladung ist ein quantitatives Maß für die elektrochemisch hervorgerufene Farbe. Sie wird jeweils für eine spezielle Wellenlänge angegeben und lässt sich durch die nachstehende Formel (1) darstellen,

$$E = \frac{\log\left(\frac{\tau_{ch}}{\tau_{dis}}\right)}{C_{ch}} \qquad (1)$$

worin $\tau_{ch}$ die Transparenz im geladenen Zustand, $\tau_{dis}$ die Transparenz im ungeladenen Zustand und $C_{ch}$ die für die Farbänderung benötigte Ladung bedeuten. Im Falle einer 35,0 mM Fe-MEPE-Lösung in Ethanol mit einer Schichtdicke von ca. 400 nm liegt sie bei etwa 590 nm $cm^2/C$ und ist somit deutlich höher als für die bisher verwendeten Materialien erreichbar (für $WO_3$ kommt man auf bis zu ~ 30 - 120 $cm^2/C$, für Preußisch Blau auf bis zu ~ 50 - 100 $cm^2/C$), siehe Figur 5.

Für die Auswahl von erfindungsgemäß geeigneten Metallkationen ist zu beachten, dass diese formal in mindestens zwei Oxidationsstufen existieren können müssen, wobei sich die optischen Eigenschaften der Komplexe (d.h. vor allem die Intensität der Charge-Transfer-Banden) abhängig von der jeweiligen Oxidationsstufe unterscheiden müssen. Um energieeffiziente elektrochrome Fenster herstellen zu können, sollte das Redoxpotential vorzugsweise im Bereich von 0.1 - 3 V, stärker bevorzugt im Bereich von 0,1 - 1,6 V liegen. Erfindungsgemäß können Komplexe eines oder mehrerer Übergangsmetallkationen, ausgewählt unter Cr, Mn, Fe, Co, Ni, Cu, Mo, Ru, Rh, Pd, eingesetzt werden, wobei Mn, Fe und Co zu bevorzugen sind, darunter ganz besonders Fe. Fe ist deshalb besonders bevorzugt, weil es sich durch ein gutes Schaltpotential und einen hohen Farbkontrast auszeichnet und eisenhaltige Komplexe der vorgenannten Art eine besonders hohe Schaltstabilität aufweisen. So lässt sich mit niedrigen Spannungen (wenigen Volt) ein reversibler Farbwechsel des Metallions von farbig zu transparent erzeugen. Bei der Oxidation von beispielsweise Fe(II) nach Fe(III) ist ein reversibles Schalten von blau zu farblos bei einer Spannung von etwa 1,6 V zu beobachten.

Es können je nach Bedarf ein einzelner Komplexligand in Kombination mit einer einzelnen Art Metallkation, ein einzelner Komplexligand mit zwei oder mehr Metallkationen-Arten, eine Mischung von zwei oder mehr Komplexliganden mit nur einer Art Metallkation sowie eine Mischung von zwei oder mehr Komplexliganden mit einer Mischung von zwei oder mehr Metallkationen-Arten eingesetzt werden. Hierdurch lässt sich eine nochmals gesteigerte hohe Variabilität an Farben und Farbtönungen, darunter auch grau oder braun, sowie eine hohe Variabilität der möglichen Schaltpotentiale erreichen.

Als Elektrolyte kommen transparente, flüssige, feste oder gelförmige Verbindungen, wie herkömmliche Batterieelektrolyte auf Basis organischer Carbonate (z.B. Ethylencarbonat (EC), Diethylcarbonat (DEC), Ethylmethylcarbonat

(EMC), Propylencarbonat (PC)) Polyethylenoxiden (Molmassen zwischen 200 bis 20.000) oder Gemische daraus, PMMA/PC-Gemische oder verschiedene Polyacrylate mit einem Leitsalz in Frage. Das Leitsalz enthält leichtbewegliche Kationen sowie Anionen, die einerseits einen hohen Dissoziationsgrad aufweisen, d.h. vorzugsweise Anionen einer starken Säure sind, die andererseits aber auch mit der Metall-Komplexverbindung kompatibel sind - im oxidativen Schritt an der Arbeitselektrode, d.h. bei Anlegen einer Spannung, müssen Anionen eine ionische Bindung aufbauen, um einen Ladungsausgleich gegenüber den in den oxidierten Zustand gewechselten Metallionen bereitzustellen. Es ist weiterhin günstig, wenn die Kationen des Leitsalzes in der Lage sind, in das Material der zweiten Elektrode, sofern diese vorhanden ist, zu interkalieren. Typische Salze sind Salze des Lithiums wie $LiClO_4$, $LiPF_6$ und $LiBF_4$. Dagegen sollte allerdings eine Interkalation der Anionen möglichst vermieden werden, da dies schon beim ersten Rücklauf irreversible Veränderungen bewirkt; vielmehr dürfen die Anionen nur ionische Verbindungen mit Metallionen dieser Schicht eingehen, die reversibel sind. Hier hat sich beispielsweise das Perchlorat-Anion als günstig erwiesen, während beispielsweise das Tetrafluoroborat-Anion in eine MEPE-Schicht in unerwünschter Weise interkalieren kann, wie anhand eines Versuchs mit Tetraethylammonium-tetrafluoroborat ($TEABF_4$) festgestellt werden musste.

Polymere wie z.B. PMMA können als Verdickungsmittel und damit zur Elektrolytstabilisierung und -verfestigung eingesetzt werden.

Ionische Flüssigkeiten können ebenfalls als Elektrolyte eingesetzt werden. Durch ihre mechanische Festigkeit sind diese für die Anwendung in Fassadenverglasungen oder in Automobilfenstern sogar von Vorteil. Zusätzlich sorgen sie in der Zelle für eine Fixierung der die Metall-Komplexverbindung enthaltenden Schicht. Dies verbessert die Lebensdauer, was sich insbesondere unter schroffen Bedingungen (Hitze, Vibrationen) bemerkbar macht.

Unabhängig davon, welche Komplex-Verbindung(en) für die Arbeitselektrode ausgewählt wird/werden, um eine spezielle Farbe bzw. einen speziellen Grau- oder Braunton zu erzielen, wird die erfindungsgemäße Verbesserung der Haftung des bzw. der Komplex-Verbindung(en) in der Arbeitselektroden-Schicht dadurch erreicht, dass diese, vorzugsweise bereits gelöst in einem geeigneten der oben genannten Lösungsmittel, mit einem transparenten Einbettungsmaterial mit den vorstehend erwähnten Merkmalen und Eigenschaften vermischt wird/werden. Das Einbettungsmaterial liegt zumindest im Falle von Kieselsäure(hetero)polykondensaten aufgrund des üblichen Herstellungsverfahrens hierfür (hydrolytische Kondensation im Sol-Gel-Verfahren) in vielen Fällen lösungsmittelfrei und in Form einer leichtbeweglichen bis hochviskosen Flüssigkeit oder einem Festkörper vor, die/der sich aufgrund der vorhandenen OH-Gruppen gut im für die Metall-Komplexverbindung gewählte Lösungsmittel löst.

Die erfindungsgemäß als Einbettungsmaterial einsetzbaren Kieselsäure(hetero)polykondensate sind häufig entweder aus oder unter Verwendung von Silanen mit mindestens einem über Kohlenstoff an das Silicium gebundenen Rest hergestellt, der mindestens eine organisch polymerisierbare (polyaddierbare) C=C-Doppelbindung, vorzugsweise in Form von Acrylat- oder Methacrylatgruppen, und mindestens eine Hydroxygruppe trägt, oder sie sind aus oder unter Verwendung eines Gemischs von mindestens zwei Silanen hergestellt, wobei ein erstes Silan einen über Kohlenstoff an das Silicium gebundenen Rest mit mindestens einer organisch polymerisierbaren (polyaddierbaren) C=C-Doppelbindung enthält und ein zweites Silan einen über Kohlenstoff an das Silicium gebunden Rest enthält, der einen Hydroxy-Substituenten aufweist. Enthält das Einbettungsmaterial demnach ein oder mehrere Kieselsäure(hetero)polykondensat(e), was häufig bevorzugt ist, können aus dem Stand der Technik bekannte Materialien eingesetzt werden. Diesbezüglich kann z.B. verwiesen werden auf Polykondensate,

- die hergestellt wurden unter Verwendung von Silanen der allgemeinen Formel (A):

$$\{X_aR_bSi[R'(A)_c]_{(4-a-b)}\}_xB \qquad (A)$$

sofern die Reste und Indices darin die folgende Bedeutung haben:

X: Hydroxy, Alkoxy, Acyloxy, Alkylcarbonyl, Alkoxycarbonyl oder $-NR''_2$;
R: Alkyl, Alkenyl, Aryl, Alkylaryl oder Arylalkyl;
R': Alkylen, Arylen oder Alkylenarylen;
R": Wasserstoff, Alkyl oder Aryl;
A: O, S, PR", POR" oder NHC(O)O;
B: geradkettiger oder verzweigter organischer Rest, der sich von einer Verbindung mit mehreren C=C-Doppelbindungen und 5 bis 50 Kohlenstoffatomen ableitet, die x-fach für die Anbindung an A verbraucht wurden; mindestens einen verbleibenden Rest B muss das Silan aufweisen, um in der vorliegende Erfindung eingesetzt werden zu können;
a: 1, 2 oder 3; b: 0, 1 oder 2; c: 0 oder 1; x: ganze Zahl, deren Maximalwert der Anzahl von Doppelbindungen in der Verbindung B minus 1 entspricht.

Solche Silane und Polykondensate sind in DE 40 11 044 A1 offenbart.

- oder die hergestellt wurden unter Verwendung von Silanen der allgemeinen Formel (B)

$$B\{A\text{-}(Z)_d\text{-}R^1(R^2)\text{-}R'\text{-}SiX_aR_b\}_c \qquad (B)$$

sofern die Reste und Indices darin folgende Bedeutung haben:

A = O, S, NH oder C(O)O;
B = ein geradkettiger oder verzweigter organischer Rest mit mindestens einer C=C-Doppelbindung und 4 bis 50 Kohlenstoffatomen;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoff-Atomen, wobei diese Reste durch Sauerstoff- und Schwefelatome oder durch Aminogruppen unterbrochen sein können;
$R^1$ = Stickstoff, Alkylen, Arylen oder Alkylenarylen mit jeweils 1 bis 10 Kohlenstoffatomen, wobei diese Reste durch Sauerstoff- oder Schwefelatome oder durch Aminogruppen unterbrochen sein können;
$R^2$ = OH,
X = Hydroxy, Alkoxy, Acyloxy, Alkylcarbonyl oder Alkoxycarbonyl;
Z = CO oder CHR, mit R gleich H, Alkyl, Aryl oder Alkylaryl;
a = 1, 2 oder 3 und vorzugsweise 2 (wobei vor allem lineare Ketten und Ringe entstehen);
b = 0,1 oder 2.

Solche Silane sind in DE 44 16 857 C1 offenbart;

- oder die hergestellt wurden unter Verwendung von Silanen der allgemeinen Formel (C)

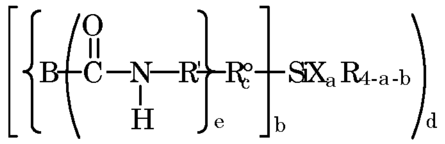

(C)

sofern die Reste und Indices darin die folgende Bedeutung haben:

B = organischer Rest mit mindestens einer C=C-Doppelbindung;
R = Alkyl, Alkenyl, Aryl, Alkylaryl oder Arylalkyl;
R° und R' jeweils = Alkylen, Alkenylen, Arylen, Alkylenarylen oder Arylenalkylen;
X = Hydroxy, Alkoxy, Acyloxy, Alkylcarbonyl oder Alkoxycarbonyl;
a = 1, 2 oder 3; b = 1, 2 oder 3, mit a + b = 2, 3 oder 4; c = 1; d = 1, 2, 3, 4, 5, 6, 7, 8, 9 oder 10;
e = 1, 2 oder 3 oder 4.

Silane der Formel (C) sind in DE 199 10 895 A1 offenbart.

- oder die hergestellt wurden unter Verwendung von Silanen der allgemeinen Formel (D):

$$\{B'\text{-}Z'\text{-}R^1(B)\text{-}R\text{-}\}_a(R')_bSiX_{4\text{-}a\text{-}b} \qquad (D)$$

worin die Reste und Indices die folgende Bedeutung haben:

R ist eine Alkylen-, Arylen- oder Alkylenarylengruppe, die durch eine oder mehrere Sauerstoff- oder Schwefelatome oder Carboxyl- oder Aminogruppen unterbrochen sein oder solche Atome/Gruppen an ihrem dem Siliciumatom abgewandten Ende tragen kann;
$R^1$ ist eine mit Z' substituierte Alkylen-, Arylen- oder Alkylenarylengruppe, die durch eine oder mehrere Sauerstoff- oder Schwefelatome oder Carboxyl- oder Aminogruppen unterbrochen sein oder solche Atome/Gruppen an einem ihrer Enden tragen kann;
R' ist eine Alkyl-, Alkenyl-, Aryl-, Alkylaryl- oder Arylalkylgruppe;
B und B' können gleich oder verschieden sein, beide Reste haben die Bedeutung einer geradkettigen oder verzweigten organischen Gruppe mit mindestens einer C=C-Doppelbindung und mindestens zwei Kohlenstoffatomen;

X ist eine Gruppe, die unter Ausbildung von Si-O-Si-Brücken eine hydrolytische Kondensationsreaktion eingehen kann, mit Ausnahme von Wasserstoff und Halogen;
Z' hat die Bedeutung -NH-C(O)O-, -NH-C(O)- oder -CO(O)-, wobei die beiden erstgenannten Reste über die NH-Gruppe am Rest B' gebunden sind, während die Carboxylatgruppe in beiden Richtungen weisen kann;
a bedeutet 1 oder 2 und b ist 0 oder 1.

Solche Silane und Polykondensate sind in DE 103 49 766 A1 offenbart.

- oder die hergestellt wurden unter Verwendung von Silanen der allgemeinen Formel (E):

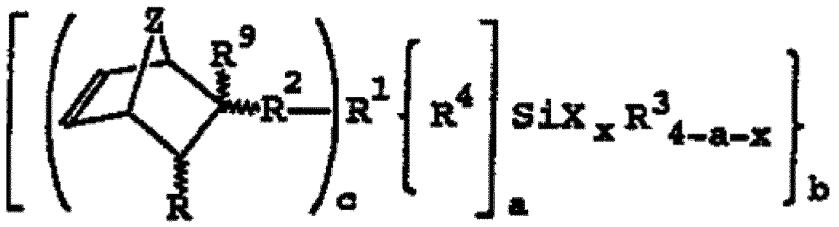

(E)

sofern die Reste und Indices gleich oder verschieden sind und folgende Bedeutung haben:

R ist Wasserstoff, $R^2$-$R^1$-$R^4$-$SiX_xR^3_{3-x}$, Carboxyl, Alkyl, Alkenyl, Aryl, Alkylaryl oder Arylalkyl,
$R^1$ und $R^2$ sind unabhängig voneinander Alkylen, Arylen, Arylenalkylen oder Arylenalkylen,
$R^3$ ist Alkyl, Alkenyl, Aryl, Alkylaryl oder Arylalkyl,
$R^4$ ist $-(CHR^6-CHR^6)_n-$ mit n = 0 oder 1, $-CHR^6-CHR^6-S-R^5-$, $-C(O)-S-R^5-$, $CHR^6-CHR^6-NR^6-R^5$, $-Y-C(S)-NH-R^5-$, $-S-R^5-$, $-Y-C(O)-NH-R^5-$, $-C(O)-O-R^5-$, $-Y-CO-C_2H_3(OH)-R^5-$ oder $-C(O)-NR^6-R^5$,
$R^5$ ist Alkylen, Arylen, Arylenalkylen oder Arylenalkylen,
$R^6$ ist Wasserstoff, Alkyl oder Aryl mit 1 bis 10 Kohlenstoffatomen,
$R^9$ ist Wasserstoff, Alkyl, Alkenyl, Aryl, Alkylaryl oder Arylalkyl,
X ist Hydroxy, Alkoxy, Acyloxy, Alkylcarbonyl oder Alkoxycarbonyl;
Y ist -O-, -S- oder $NR^6$,
Z ist -O- oder $-(CHR^6)_m$ mit m gleich 1 oder 2;
a ist 1, 2 oder 3, mit b = 1 für a = 2 oder 3; b ist 1, 2 oder 3, mit a = 1 für b = 2 oder 3
c ist eine ganze Zahl von 1 bis 6; x ist 1, 2 oder 3 und
a + x sind 2, 3 oder 4.

Um zu einem Kieselsäure(hetero)polykondensat der Formel (E) mit Einheiten zu kommen, die sowohl OH- als auch organisch polymerisierbare C=C-Doppelbindungen tragen, ist es günstig, wenn $R^4$ die Bedeutung $-Y-CO-C_2H_3(OH)-R^5-$ hat, wobei c vorzugsweise 1 ist, aber auch größer sein kann.
Silane der Formel (E) und daraus abgeleitete Kieselsäurepolykondensate sind aus DE 196 27 198 bekannt.

- oder die hergestellt wurden unter Verwendung von Silanen der allgemeinen Formel (F)

$\{B-R^1-R^a-\}_a(R')_bSi(X^1)_{4-a-b}$ (F)
|
Z'
|
$R^3[-Z''-\{R^2-R^b-\}_a(R'')_bSi(X^2)_{4-a-b}]_c$
|
B'

worin $R^a$ und $R^b$ gleich oder verschieden sind und jeweils offenkettige und/oder cyclische Alkylen-, Arylen- oder Alkylenarylengruppen mit jeweils 1 bis 10 Kohlenstoffatomen darstellen, die durch eine oder mehrere Sauerstoff- oder Schwefelatome oder Carboxyl- oder Aminogruppen unterbrochen sein oder solche Atome/Gruppen an

ihrem dem Siliciumatom abgewandten Ende tragen können;
$R^1$ und $R^2$ gleich oder verschieden sind und jeweils eine mit OH substituierte, offenkettige und/oder cyclische Alkylen-, Arylen- oder Alkylenarylengruppe mit jeweils 1 bis 10 Kohlenstoffatomen sind, die durch eine oder mehrere Sauerstoff- oder Schwefelatome oder Carboxyl- oder Aminogruppen unterbrochen sein oder solche Atome/Gruppen an einem ihrer Enden tragen können,
R' und R" gleich oder verschieden sind und eine offenkettige und/oder cyclische Alkyl-, Alkenyl-, Aryl-, Alkylaryl- oder Arylalkylgruppe mit vorzugsweise 1 bis 20 Kohlenstoffatomen darstellen, B und B' gleich oder verschieden sind und die Bedeutung einer geradkettigen oder verzweigten, organisch polymerisierbaren Gruppe mit mindestens einer C=C-Doppelbindung haben,
Z' und Z" unabhängig voneinander die Bedeutung -NH-C(O)O-, -NH-C(O)- oder -CO(O)- haben, wobei die beiden erstgenannte Reste über die NH-Gruppe am Rest $R^3$ gebunden sind, während die Carboxylatgruppe in beide Richtungen weisen kann,
$R^3$ eine Einfachbindung (nur im Falle von c gleich 1 und Z' gleich Z" gleich -C(O)O) bedeutet oder ein beliebiger Rest ist, der c+1 Valenzen besitzt,
$X^1$ und $X^2$ jeweils eine Gruppe ist, die unter Ausbildung von Si-O-Si-Brücken eine hydrolytische Kondensationsreaktion eingehen kann,
a 1 oder 2 ist,
b 0 oder 1 ist, wobei a + b vorzugsweise 2 ist, wodurch vor allem lineare Ketten und Ringe entstehen, und
c 1, 2, 3, 4, 5 oder 6 oder eine höhere ganze Zahl ist.

Silane der Formel (F) und daraus hergestellte Kieselsäurepolykondensate sind aus EP 1 874 847 B1 bekannt;

- oder die hergestellt sind unter Verwendung von Silanen der nachstehenden Formel (G),

$$\{B\text{-}R^1\text{-}R\text{-}\}_a(R')_bSi(X)_{4-a-b} \qquad (G)$$

(wobei an $R^1$ gebunden:)

$$\begin{array}{c} | \\ Z' \\ | \\ B', \end{array}$$

worin die Reste und Indices die folgende Bedeutung haben:

R ist eine offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome/Gruppen an ihrem dem Siliciumatom abgewandten Ende tragen kann;
$R^1$ ist eine mit Z' substituierte, offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome/Gruppen an einem ihrer Enden tragen kann,
R' ist eine offenkettige und/oder cyclische Alkyl-, Alkenyl-, Aryl-, Alkylaryl- oder Arylalkylgruppe mit vorzugsweise 1 bis 20 Kohlenstoffatomen,
B und B' sind gleich oder verschieden; beide Reste haben die Bedeutung einer geradkettigen oder verzweigten, organisch polymerisierbaren Gruppe mit mindestens einer C=C-Doppelbindung und mindestens 2 Kohlenstoffatomen haben,
X ist eine Gruppe, die unter Ausbildung von Si-O-Si-Brücken eine hydrolytische Kondensationsreaktion eingehen kann,
Z' hat die Bedeutung -NH-C(O)O-, -NH-C(O)- oder-CO(O)-, wobei die beiden erstgenannte Reste über die NH-Gruppe am Rest B' gebunden sind, während die Carboxylatgruppe in beide Richtungen weisen kann, wobei dann, wenn Z' eine -(CO)O-Gruppe ist, deren Kohlenstoffatom am Rest B' gebunden ist, die Gruppierung B'-Z'- nicht die Bedeutung einer Acrylatgruppe haben darf, wenn B eine Acrylatgruppe enthält, und die Gruppierung B'-Z'- keine Methacrylatgruppe darstellen darf, wenn B eine Methacrylatgruppe enthält,
a bedeutet 1 oder 2, und b ist 0 oder 1.

Silane der Formel (G) und daraus hergestellt Kieselsäurepolykondensate sind aus EP 1 914 260 A1 bekannt.

Dabei ist darauf zu verweisen, dass in einer ersten Variante der Herstellung des Einbettungsmaterials dann, wenn ein Silan aus der vorstehenden Gruppe ausgewählt wird, dessen über Kohlenstoff an das Silicium gebundener

Rest (oder alle derartigen Reste) keine Hydroxygruppen aufweisen, das Kieselsäure(hetero)polykondensat unter Verwendung eines zweiten Silans aufgebaut sein muss, welches einen solchen über Kohlenstoff an das Silicium gebundenen Rest besitzt. Silane mit hydroxysubstituierten, über Kohlenstoff an das Silicium gebundenen Resten sind im Stand der Technik bekannt. In einer zweiten Variante der Herstellung des Einbettmaterials kann ein Silan, das einen bzw. mehrere über Kohlenstoff an das Silicium gebundenen Rest(e) mit zwei Hydroxygruppen besitzt, im Unterschuss mit einer Verbindung umgesetzt werden, die mit Hydroxygruppen reagiert und eine C=C-Doppelbindung trägt, beispielsweise einem Methacrylatester, dessen Estergruppe eine Carbonsäure- oder eine Isocyanatfunktion aufweist. Dabei entsteht eine Mischung aus drei verschiedenen Silanen, wobei das erste Silan an einem über Kohlenstoff an das Silicium gebundenen Rest zwei Hydroxygruppen aufweist, das zweite Silan an diesem Rest eine Hydroxygruppe und eine organisch polymerisierbare C=C-Doppelbindung aufweist und das dritte Silan an diesem Rest zwei organisch polymerisierbare C=C-Doppelbindung aufweist, siehe z.B. Beispiel B)I). In dieser Variante ist es selbstverständlich auch möglich, die Umsetzung mit der genannten Verbindung am bereits hydrolytisch kondensierten Kieselsäurepolykondensat durchzuführen. Weitere Varianten der Herstellung sind z.B. aus der Druckschrift WO 2013/041723 bekannt, in welcher die Herstellung von Kieselsäure(hetero)polykondensaten der Formel (H)

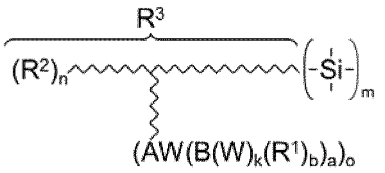

(H)

beschrieben ist, worin

$R^1$ einen ungesättigten, organisch polymerisierbaren Rest bezeichnen kann, der mindestens eine nichtaromatische C=C-Doppelbindung trägt,
$R^2$ eine Hydroxygruppe ist,
$R^3$ einen Rest mit einem kohlenwasserstoffhaltigen Rückgrat bezeichnet, der über Kohlenstoff am Silicium gebunden ist, wobei die Verzweigung der Zickzacklinie in der Formel (3) eine Verzweigung dieses Rückgrads an einer beliebigen Stelle symbolisiert,
die drei nicht näher gekennzeichneten Bindungen des Si-Atom für weitere, am Siliciumatom gebundene Reste stehen, ausgewählt unter von Silicium abhydrolysierbaren Resten, Hydroxygruppen und über ein Kohlenstoffatom am Silicium gebundenen Resten, die dieselbe Bedeutung wie $R^3$ oder eine davon abweichende andere Bedeutung haben können, oder Sauerstoffbrücken zu weiteren Siliciumatomen bzw. anderen Metallatomen darstellen, wenn die Struktur (3) Bestandteil eines Kieselsäure(hetero)polykondensats ist,
A eine Kupplungsgruppe bedeutet, die ausgewählt ist unter-S-, -NH- und $NR^4$, worin $R^4$ einen kohlenwasserstoffhaltigen Rest darstellt,
B eine Kupplungsgruppe bedeutet, die ausgewählt ist unter Ester-, Ether-, Säureamid- und Urethangruppen,
W ein substituierter oder unsubstituierter Kohlenwasserstoffrest ist, dessen Kette unterbrochen sein kann durch -S-, -O-, -NH-, $-NR^4-$, -C(O)O-, -NHC(O)-, -C(O)NH-, -NHC(O)O-, -C(O)NHC(O)-, -NHC(O)NH-, -S(O)-, -C(S)O-, -C(S)NH-, -NHC(S)-, -NHC(S)O-,
der Index k 0 oder 1 ist,
die Indices m und n unabhängig voneinander für 1, 2 oder eine ganze Zahl von mehr als 2 stehen,
der Index o mindestens 1 bedeutet, wenn die Formel (H) ein Silan darstellt, und mindestens 0,2 bedeutet, wenn die Formel ein Kieselsäure(hetero)polykondensat bedeutet,
a 1, 2, 3, 4 oder eine größere ganze Zahl bedeutet und
b 1, 2, 3, 4 oder eine größere ganze Zahl bedeutet.

Auch Derivate von Verbindungen oder Kieselsäure(hetero)polykondensaten der Formel (H), die ebenfalls mindestens eine Hydroxygruppe und einen ungesättigten, organisch polymerisierbaren Rest mit mindestens einer nichtaromatischen C=C-Doppelbindung an jeweils einem über Kohlenstoff an Silicium gebundenen Rest tragen, sind aus dieser Druckschrift bekannt.

In vergleichbarer Weise lassen sich organische Verbindungen mit mehreren Einheiten herstellen, von denen ein Teil hydroxysubstituiert ist und ein anderer Teil organisch polymerisierbare C=C-Doppelbindungen trägt. Beispielsweise lassen sich Polyacrylatverbindungen wie Tetraacrylate (Beispiel: Pentaerythritoltetraacrylat) oder Triacrylate (Beispiel: Glycerintriacrylat) mit einem Thioalkohol im Unterschuss umsetzen, wobei dieThiol-Gruppe unter Thiol-en-Addition an nur einen Teil der Acrylatgruppen anbindet, siehe Beispiel B)II).

Sowohl rein organische Acrylate und Methacrylate als auch Kieselsäure(hetero)polykondensate sind in der

Regel farblos und transparent, was sie besonders geeignet macht. Das Einbettungsmaterial sollte vorzugsweise frei sein von freien Carbonsäuregruppen. Die Erfinder mussten nämlich feststellen, dass die Verwendung von Einbettungsmaterialien mit Kieselsäure(hetero)polykondensaten, deren über Kohlenstoff an das Silicium gebundene Gruppen Carbonsäuregruppen aufweisen, in den durchgeführten Versuchen eine Ausfällung der Metall-Komplexverbindungen zur Folge hatte.

Die Metall-Komplexverbindung des Materials der vorliegenden Erfindung kann in einer Konzentration von 5-100 mM in einem polaren Lösungsmittel vorliegen, und/oder das Einbettungsmaterial kann in einem Molverhältnis von 10:1 bis 1:40 (Komplexverbindung zu Einbettungsmaterial) vorliegen.

Die Schaltgeschwindigkeit von Arbeitselektrodenschichten aus den erfindungsgemäßen Material-Kombinationen liegt bei brauchbaren Konzentrationen an Metallkomplex-Verbindung in der Arbeitselektrode (z.B. 20-100 mM, insbesondere ca. 35 mM) auch bei hohen Anteilen an Einbettmaterial (z.B. einem Molverhältnis von bis zu ca. 20:1, ja häufig von bis zu 40:1 und maximal ca. 100:1 Einbettmaterial zu Metallkomplex-Verbindung) im Bereich von wenigen Sekunden bei einer Größe der Elektrodenflächen von 5 x 5 $cm^2$. Mit zunehmender Größe der elektrochromen Zelle und höherem Anteil an Einbettungsmaterial nimmt diese allerdings zu.

Außerdem konnten die Erfinder feststellen, dass der Memory-Effekt, d.h. die Stabilität des Ladungszustands in Abwesenheit der Zufuhr von Energie, durch den Zusatz des Einbettungsmaterials verbessert ist. Mit zunehmendem Anteil an Einbettungsmaterial sinkt dabei die Geschwindigkeit der Selbstentladung. **Figur 2** zeigt diesen Effekt anhand des Ladungszustands einer Arbeitselektrode (mit 35 mM Fe-MEPE, siehe unten, als Metallkomplex-Verbindung in Ethanol) mit und ohne Einbettungsmaterial (einem der unten näher erläuterten Einbettmaterialien mit einem molaren Verhältnis zu Fe-MEPE) nach zwei und nach sechs Stunden. Es lässt sich erkennen, dass aufgrund des Memory-Effekts lediglich beim Schaltvorgang Strom in einer bemerkenswerten Menge verbraucht wird; die Aufrechterhaltung des geladenen Zustands benötigt nur minimale Mengen an Strom.

Versuche der Erfinder haben gezeigt, dass reine Fe-MEPE-Schichten, die höheren Temperaturen ausgesetzt waren, ihre Farbe irreversibel ins Grüne veränderten und sich nicht mehr schalten ließen, siehe **Figur 3.** Dieser Effekt lässt sich bei erfindungsgemäß eingebetteten Fe-MEPE-Schichten nicht finden. Diese zeigen kaum eine Farbänderung (der Peak von 590 nm wandert leicht bis auf ca. 610 nm) und lassen sich auch nach dem Tempern weiterhin stabil schalten.

Die Verbesserung der Beständigkeit gegenüber hohen Temperaturen bei Verwendung des Einbettmaterials kann der **Figur 4** entnommen werden. Darin sind die Transmissionseigenschaften von Fe-MEPE bei ca. 590 nm ohne und mit verschiedenen spezifischen Einbettungsmaterialien bei Temperaturen von bis zu 200°C verglichen. Man erkennt, dass anfänglich die Transmission sehr gering ist, da die Schichten dunkelblau sind und kaum sichtbares Licht passieren lassen. Mit steigender Temperatur nimmt die blaue Farbe ab, und somit steigt auch die Transmission.

Ein wesentlicher Anwendungsbereich für die elektrochromen Zellen ist der Einsatz in Gebäudeverglasungen und Fenstern, deren Lichtdurchlässigkeit und Farbe je nach Sonneneinstrahlung verändert werden können. Dies kann zu beträchtlichen Energieeinsparungen führen. Im Sommer lässt sich der Energiebedarf zum Kühlen und im Winter Heizenergie verringern. Auch ein höherer Komfort durch eine bessere Tageslichtausleuchtung von Räumen ist dadurch gewährleistet.

Ein weiteres Anwendungsgebiet findet sich im Bereich Fahrgasttransport z.B. in Automobilen, Zügen oder Flugzeuge. Hier kann neben der Reduzierung der Sonneneinstrahlung eine Verbesserung der Privatsphäre erreicht werden.

Möglich ist auch ein Einsatz in Displays und sogenannten "E-Papieren" oder "Electronic Paper". Hierfür muss nur eines der beiden Substrate lichtdurchlässig sein. Von Vorteil auf diesem Einsatzgebiet sind vor allem die Flexibilität und die Energieeinsparung während des Betriebs der elektrochromen Zellen.

Nachstehend soll die Erfindung anhand von Beispielen und Vergleichsversuchen näher erläutert werden.

A) Beispiele für die Herstellung von Metall-Komplexverbindungen

Ia+b) Synthese von Fe-MEPE gemäß der oben angegebenen Formel mit R = H und n = 1

Fe-MEPE wurde nach dem Verfahren hergestellt, das von F.S. Han et al. in Adv. Mat. 2007, 19, 3928-3931 beschrieben ist. Es wurden 1,25 g Fe-MEPE in 50 ml EtOH eingesetzt; die Mischung wurde für mehr als 24 h bei Raumtemperatur gerührt. Die Lösung wurde mit Ethanol auf 35,0 mM eingestellt.

B) Beispiele für die Herstellung des Einbettungsmaterials

I) Synthese von organisch modifizierten Kieselsäurepolykondensaten

I.1. Synthese von Basisharzsystem I (BS-I) (nach einer Vorschrift aus DE 4416857)

Zur Vorlage von 125,0 g (0,503 mol) 3-Glycidyloxypropyltrimethoxysilan werden unter trockener Atmosphäre Triphenylphosphin als Kat., BHT als Stabilisator und anschließend 47,35 g (0,550 mol) Methacrylsäure zugetropft und bei 80°C gerührt (ca. 24 h). Nach Zugabe von Essigester (1000 ml/mol Silan) und $H_2O$ zur Hydrolyse mit HCl als Kat. wird bei 30°C gerührt. Die Aufarbeitung erfolgt nach ca. mehrtägigem Rühren durch mehrmaliges Ausschütteln mit wässriger NaOH und mit Wasser und Filtration über hydrophobierten Filter. Es wird zunächst abrotiert und anschließend mit Ölpumpenvakuum abgezogen. Es resultiert ein flüssiges Harz ohne Einsatz von Reaktivverdünnern (Monomeren) mit einer sehr geringen Viskosität von ca. 3 - 6 Pa·s bei 25°C (stark abhängig von den genauen Hydrolyse- und Aufarbeitungsbedingungen).

I.2. Synthese von Basisharzsystem II (BS-II)

Stufe 1

Zur Vorlage von 40 g (0,08 mol) 3-Glycidyloxypropylmethyldiethoxysilan werden bei Raumtemperatur unter Rühren 38 ml 4N Salzsäure zugetropft und bei Raumtemperatur 3 Tage weitergerührt. Nach Aufarbeitung (Waschen mit Wasser, Aufnahme in Essigester, Trocknung über Natriumsulfat und Entfernung von flüchtigen Bestandteilen) wird ein flüssiges Harz mit einem hohen Kondensationsgrad (>90%) und vollständiger Ringöffnung der Epoxidgruppe erhalten. Die Viskosität des Harzes beträgt 22 Pa·s bei 25°C.

Stufe 2

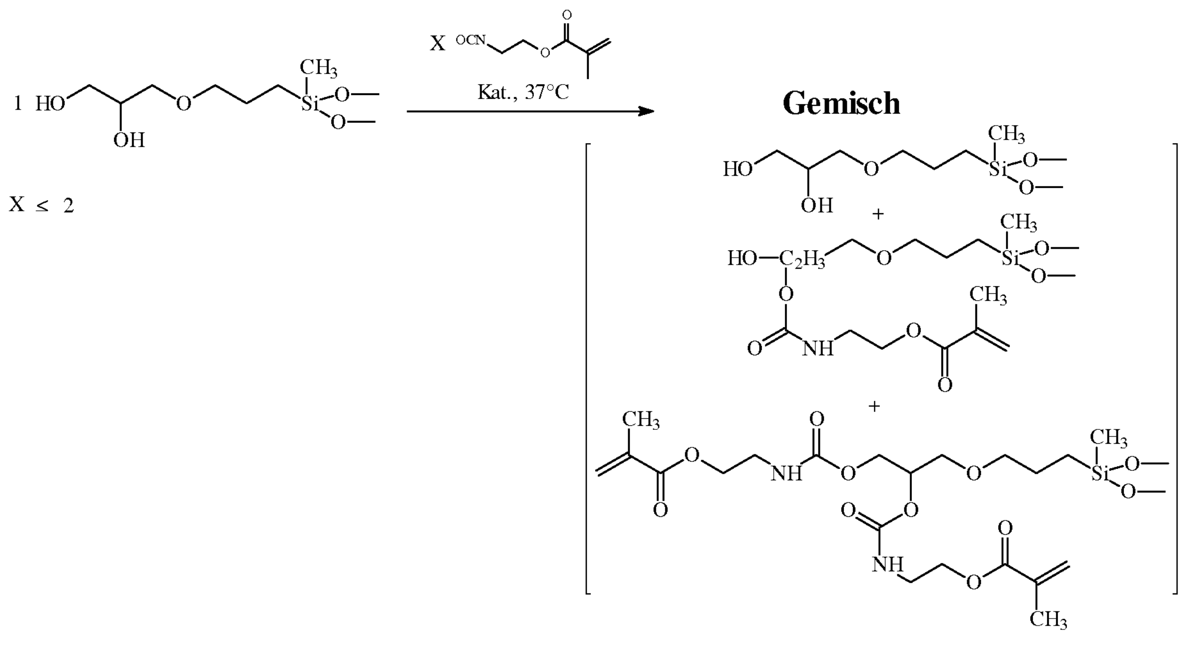


Zur Vorlage von einer Mischung aus 20 g (0,104 mol) Harz aus der Stufe 1, 24 mg BHT und 61 mg Dibutylzinndidodecanat und ggf. wasserfreiem Lösungsmittel THF werden unter trockener Atmosphäre bei 37°C unter Rühren x mol (siehe die nachstehende Tabelle) Methacrylsäureisocyanatoethylester zugetropft und bei 37°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultieren nach Entfernung des THF flüssige Harze. Für die weiteren Versuche (siehe BSMEPE-2 unten) wurde ein Gemisch eingesetzt, das ein Verhältnis von Siliciumatomen zu Methacrylatgruppen von 4:1 (d.d. es wurden 0,25 mol Isocyanat pro kondensierter Silaneinheit eingesetzt).

| BS-II | x [mol] | Viskosität [Pa s] |
|---|---|---|
| A | 0,026 | 12 |
| B | 0,052 | 73 |
| C | 0,104 | 153 |

I.3 Synthese eines Bernsteinsäure-modifizierten Basisharz-Systems (BS-IV)

Das Produkt von Basisharz BS-I wurde im Molverhältnis 1:1 mit Bernsteinsäureanhydrid umgesetzt. Dabei bildete sich ein Harz mit freien Carbonsäuregruppen, die sich $^{1}H$-NMR-spektroskopisch bei 2,6 ppm und $^{13}C$-NMR-spektroskopisch bei 173 ppm nachweisen lassen.

II) Synthese organischer Einbettmaterialien

Synthese von Basisharzsystem III (BS-III)

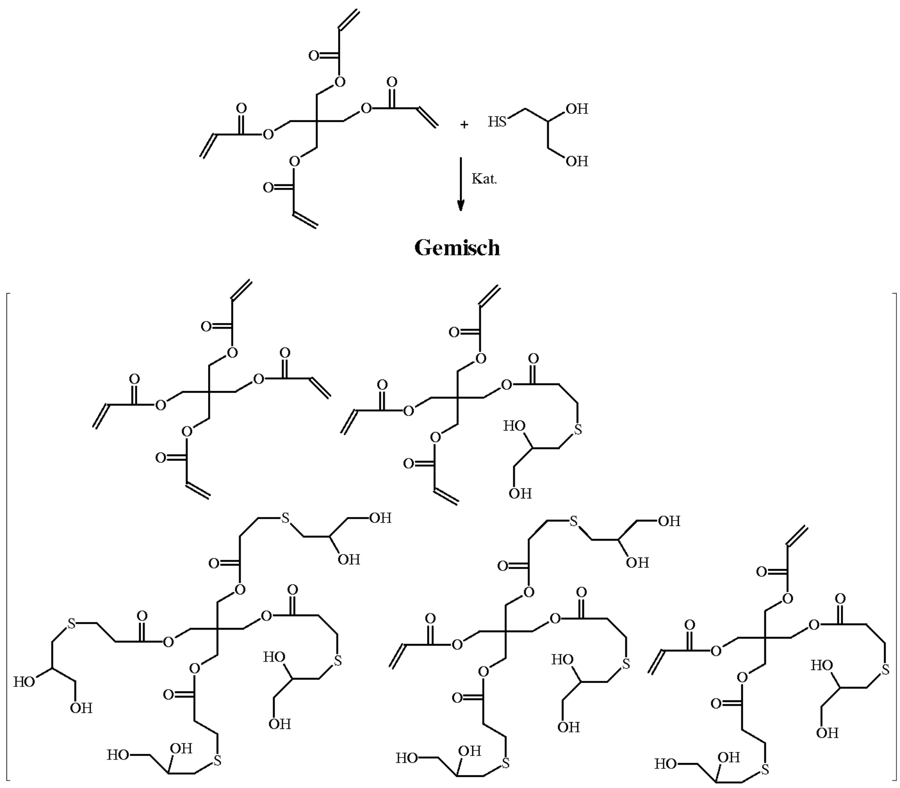


Zur Vorlage von einer Mischung aus 20 g (0,056 mol) Pentaerythritoltetraacrylat, 10 ml THF und 22,5 mg 1,8-Diazabicyclo[5.4.0]undec-7-en (DBU) werden bei 37°C unter Rühren 9,2 g (0,085 mol Thioglycerin zugetropft und bei 37°C weitergerührt. Die Umsetzung kann über die Abnahme des HS-Signals mittels NMR-Spektroskopie verfolgt werden. Das Signal für die HS-Gruppe erscheint im $^{1}H$-NMR-Spektrum bei 2,02 ppm. Es resultiert nach Entfernung des THF ein flüssiges Harz. Die Viskosität des Harzes beträgt 24 Pa·s bei 25°C.

C) Inkorporation der Metall-Komplexverbindung in das Einbettungsmaterial

Herstellung von Basisharzsystem/Fe-MEPE-Systeme (BSMEPE)

Allgemeine Vorschrift:

Fe-MEPE wurde in EtOH (alternativ sind andere Lösungsmittel möglich, beispielsweise $H_2O$, MeOH etc.) gelöst und für etwa 24 h bei RT gerührt. Die Lösung wurde auf 35,0 mM eingestellt. Zu dieser Lösung wurde eines der Basisharzsysteme BS-I, BS-IIA, BS-IIB BS-IIC oder BS-III gegeben und bei Raumtemperatur gerührt, bis eine homogene Lösung vorlag. Die Mengenverhältnisse wurden wie aus der nachstehenden Tabelle ersichtlich gewählt. Die BSMEPE-Lösung konnte danach als Beschichtungsmaterial zur Herstellung einer Arbeitselektrode eingesetzt werden. Die konkret hergestellten Mischungen ergeben sich aus der nachstehenden Tabelle.

| **BSMEPE-1** | BS-I : Fe-MEPE (Molverhältnis) | Lösungsmittel |
|---|---|---|
| A | 1 : 1 | Ethanol |
| B | 2 : 1 | |
| C | 3 : 1 | |
| D | 4 : 1 | |
| E | 6 : 1 | |
| **BSMEPE-2** | BS-IIC : Fe-MEPE (Molverhältnis) | Lösungsmittel |
| A | 3 : 1 | Ethanol |
| **BSMEPE-3** | BS-IIB : Fe-MEPE (Molverhältnis) | Lösungsmittel |
| A | 1 : 1 | Ethanol |
| B | 3 : 1 | |
| **BSMEPE-4** | BS-IIA : Fe-MEPE (Molverhältnis) | Lösungsmittel |
| A | 1 : 1 | Ethanol |
| B | 3 : 1 | |
| C | 6 : 1 | |
| D | 10 : 1 | |
| E | 18 : 1 | |
| BSMEPE-5 | BS-III : Fe-MEPE (Molverhältnis) | Lösungsmittel |
| A | 3 : 1 | Ethanol |

Mit dem carbonsäuregruppenhaltigen BS-IV konnte dagegen kein Material gewonnen werden, das sich als erfindungsgemäßes Material für die Arbeitselektrode einer elektrochromen Zellen eignet, wie sich aus nachstehendem Vergleichsversuch ergibt:

Fe-MEPE wurde in EtOH (oder anderen Lösungsmitteln, wie $H_2O$, MeOH, etc.) gelöst und für etwa 24 h bei RT gerührt. Zu dieser Lösung wurde BS-IV gegeben und bei RT gerührt. Dabei bildeten sich blaue Agglomerate, so dass die Lösung nicht homogen und folglich auch nicht für die Beschichtung geeignet war. Das Produkt dieses Vergleichsversuchs wird mit BSMEPE-6A bezeichnet.

D) Schaltbarkeit von Fe-MEPE-Schichten

Bereits mit niedrigen Spannungen lässt sich ein reversibler Farbwechsel des Metallions der MEPE-Schicht von farbig zu transparent erzeugen. Bei der Oxidation des Fe(II)-MEPE nach Fe(III)-MEPE ist ein reversibles Schalten von blau zu farblos bei einer Spannung von etwa 1.6 V zu beobachten. Die Absorption ist dabei direkt proportional zur Schichtdicke. Je nach Konzentration der Lösung kann die Schichtdicke der Arbeitselektrode im Bereich von wenigen nm bis mehreren hundert nm variiert werden und so auf individuelle Bedürfnisse in der schaltbaren Absorption angepasst

werden (siehe **Figur 5).** Die Schaltvorgänge sind über 10000 Zyklen stabil (die Messung erfolgte mit einer Schicht, in der Fe-MEPE in einer Konzentration von 35 mM vorhanden war.

E) Herstellung und elektrochemische Charakterisierung der erfindungsgemäßen Schichten

Die elektrochromen BSMEPE-Schichten wurden mit Hilfe des Tauchbeschichtungsverfahrens (Dip-Coating) hergestellt. Durch Variation der Ziehgeschwindigkeit und des Verhältnisses von Basisharzsystem zu Fe-MEPE ließ sich die Schichtdicke einstellen. Als Substrate wurden PET-ITO-Folie, ITO-, FTO- und AZO-Glas verwendet. Vor der Beschichtung wurden die Substrate zum Teil zur Verbesserung der Schichtqualität einer Corona-Vorbehandlung unterzogen. Nach dem Beschichten wurden die Proben an Luft getrocknet und dann für 24 h bei 60°C getempert. Die optischen Eigenschaften wurden mit einem UV-VIS-Spektrometer untersucht. Die Absorptionsspektren der Schichten auf FTO-Glas zeigen eine deutliche MLCT-Bande bei etwa 590 nm, deren Intensität je nach eingesetztem Basisharz und Verhältnis von Basisharz zu Fe-MEPE variiert. Diese MLCT-Bande ist verantwortlich für die Blaufärbung der Schichten. Bei einigen BSMEPE-Schichten wurden teilweise sogar höhere Absorptionen als bei reinem Fe-MEPE (35,0 mM) erreicht. Eine Abhängigkeit vom eingesetzten Substrat ist nicht gegeben.

Die Absorptionsspektren von Fe-MEPE (35,0 mM) mit BSMEPE-1 in den oben angegebenen Konzentrationsverhältnissen A bis E sind in **Figur 6** gezeigt, wobei zum Vergleich das Spektrum von Fe-MEPE ohne Einbettungsmaterial dargestellt ist. Als Substrat diente jeweils FTO-Glas. Man erkennt, dass das rein organische Einbettungsmaterial (BS-III) mit Fe-MEPE auf FTO-Glas ein ähnliches Absorptionsspektrum zeigt wie die Einbettungsmaterialien aus organisch modifizierten Kieselsäurepolykondensaten. Die Intensität der MLCT-Bande ist aber etwas geringer als bei Fe-MEPE (35,0 mM).

Die Farbwerte der Schichten auf FTO-Glas (Ziehgeschwindigkeit: 100 mm/min) wurden mit Hilfe eines Colorimeters bestimmt. L* beschreibt die Helligkeit und geht von L* = 0 (Schwarz) bis L* = 100 (Weiß). a* stellt die Rot-Grün-Achse (-128 = Grün, +127 = Rot) und b* die Gelb-Blau-Achse (-128 = Blau, 128 = Gelb) dar. Die Ebene a*/b* definiert somit einen Farbkreis und die gesuchte Farbe kann im Farbraum genau bestimmt werden. Der für die Blaufärbung auschlaggebende b*-Wert ist bei einigen Hybridpolymer/Fe-MEPE-Schichten etwas höher als bei Fe-MEPE (35,0 mM), was mit den Absorptionsspektren und den Schichtdicken korreliert.

Die Schichtdicken wurden ellipsometrisch bestimmt und mit zusätzlichen REM-Messungen noch verifiziert.

Fe-MEPE (35,0 mM): 100 mm/min:

| L* | a* | b* | Schichtdicke [nm] |
|---|---|---|---|
| 46,06 | -2,88 | -29,25 | 381 |

Basisharzsystem/Fe-MEPE: 100 mm/min

| Basisharzsystem/Fe-MEPE-System | L* | a* | b* | Schichtdicke [nm] |
|---|---|---|---|---|
| BSMEPE-1A | 56,08 | -12,78 | -24,14 | |
| BSMEPE-1A_getempert | 69,39 | -14,62 | 0,16 | |
| BSMEPE-1 B | 57,89 | -14,28 | -21,03 | |
| BSMEPE-1C | 54,30 | -10,90 | -23,91 | |
| BSMEPE-1D_mit Corona | 51,43 | -6,55 | -28,20 | 996 |
| BSMEPE -2A | 45,44 | -15,85 | -20,61 | |
| BSMEPE -2A_getempert | 58,82 | -15,47 | -2,98 | |
| BSMEPE-3A | 38,75 | -2,78 | -32,40 | |
| BSMEPE-3A_getempert | 49,26 | -13,30 | -14,92 | |
| BSMEPE-3A_mit Corona | 46,56 | -1,55 | -30,93 | 664 |

(fortgesetzt)

| Basisharzsystem/Fe-MEPE-System | L* | a* | b* | Schichtdicke [nm] |
|---|---|---|---|---|
| BSMEPE-4A | 54,85 | -7,16 | -26,70 | |
| BSMEPE-4A_getempert | 70,04 | -12,88 | -5,17 | |
| BSMEPE-4A_mit Corona | 52.82 | -4,87 | -27,44 | 280 |
| BSMEPE-4B | 44,44 | 0,28 | -31,61 | |
| BSMEPE-4B_getempert | 55,85 | -1,73 | -24,14 | |
| BSMEPE-4B_mit Corona | 47,71 | -2,18 | -34,12 | |
| BSMEPE-4B_mit Corona_getempert | 54,31 | -2,95 | -23,33 | |
| BSMEPE-4C | 53,68 | -5,11 | -30,01 | 850 |
| BSMEPE-4C_getempert | 60,11 | -5,31 | -20,90 | |
| BSMEPE-4C_mit Corona | 53,11 | -5,21 | -30,24 | 810 |
| BSMEPE-4C_mit Corona_getempert | 59,30 | -5,79 | -20,98 | |
| BSMEPE-4D | 50,31 | -2,28 | -30,92 | |
| BSMEPE-4E | 56,36 | -4,94 | -27,36 | 1870 |
| BSMEPE -4E_getempert | 62,40 | -5,62 | -16,91 | |
| BSMEPE-5A | 54,86 | -5,97 | -27,46 | |
| BSMEPE-5A_getempert | 56,18 | -11,10 | -13,94 | |

REM-Aufnahmen der Bruchkante einer Schicht aus Fe-MEPE (35,0 mM) und einer Schicht aus BSMEPE-4D auf FTO-Glas (Ziehgeschwindigkeit 100 mm/min) sind in der Figur 9 gezeigt. Die ellipsometrischen Schichtdickenmessungen und die REM-Aufnahmen der Bruchkante zeigen eine deutliche Zunahme der Schichtdicken bei den BSMEPE-Schichten im Vergleich zu reinem Fe-MEPE. Dies ist verursacht durch die höhere Viskosität durch die Zugabe des organisch modifizierten Kieselsäurepolykondensats, weil die jeweils verwendete Ziehgeschwindigkeit identisch war und bei identischer Ziehgeschwindigkeit die Schichtdicke höher wird, wenn das Material eine höhere Viskosität besitzt. Die Fe-MEPE- und BSMEPE-Schichten sind vollkommen transparent und homogen. Es zeigt sich keinerlei Oberflächenrauigkeit.

F) Elektrochemische Eigenschaften der BSMEPE-Schichten

Die Messungen wurden in einer elektrochemischen Zelle mit einer auf FTO-Glas abgeschiedenen Schicht aus Basisharzsystem/Fe-MEPE (Arbeitselektrode) und Lithium als Gegen- und Referenzelektrode durchgeführt. Als Elektrolyt wurde $LiClO_4$ in PC (Propylencarbonat) eingesetzt. Die Referenz- und Gegenelektrode wurden so ausgerichtet, dass sie etwa 1 mm von der Arbeitselektrode entfernt sind, um einen Spannungsabfall über die Distanz zu minimieren, ohne einen Kurzschluss zu erzeugen.

F-I) Cyclovoltammogramme

Zur Aufklärung der Oxidations- und Reduktionsvorgänge wurde die Cyclovoltammetrie eingesetzt. **Figur 10** zeigt das Cyclovoltammogramm von Fe-MEPE (35,0 mM) und BSMEPE-4B. Über einen Potentiostaten wird dabei die Spannung, die zwischen der Arbeits- und der Gegenelektrode anliegt, gegenüber der Spannung, die zwischen der Arbeits- und Referenzelektrode anliegt, variiert. Die gemessene Stromstärke wird in Abhängigkeit zur Spannung aufgetragen. Dadurch können im Cyclovoltammogramm (CV) die Elektrodenprozesse anhand der Peaks ausgewertet werden. Bei reinem Fe-MEPE wird ab einer Spannung von 3,8 V gegen Lithium das $Fe^{2+}$ (blau) zu $Fe^{3+}$ (farblos) oxidiert. Durch Diffusionsprozesse erstreckt sich der Oxidationsvorgang bis 4,2 V. Der Peak dieses Prozesses liegt bei 4,05 V. Der Reduktionsvorgang setzt bei 3,85 V ein. Bei den BSMEPE-Schichten werden die Oxidations- und Reduktionspeaks etwas breiter, wodurch sich die Schaltspannungen etwas verändern. Aber alle vermessenen BSMEPE-Schichten zeigen ein reversibles Schaltverhalten von blau nach farblos, d.h. die Oxidation und Reduktion von Fe-MEPE werden in hybriden Matrixsystemen nicht gestört. Die Fläche unter den Peaks korreliert mit den Ladungskapazitäten der Schichten und

deutet auf eine hohe Reversibilität hin, da sie etwa gleich groß sind. Auch von BSMEPE-2C wurde ein Cyclovoltammogramm erstellt; dieses zeigt dieselben Effekte.

F-II) Ladekurven:

Beim galvanostatischen Laden/Entladen wird ein Strom zwischen der Arbeits- und der Gegenelektrode vorgegeben und die Änderung der Spannung zwischen den Elektroden im Bezug zur Spannung zwischen der Gegen- und Referenzelektrode gemessen. Durch eine obere und untere Spannungsgrenze kann das Ladungsverhalten der Schichten aufgezeigt werden. Von 3,2 V bis 4,4 V wird die Schicht geladen und von 4,4 V bis 3,2 V wieder entladen. Ein symmetrischer Verlauf der beiden Kurven deutet auf einen reversiblen Prozess hin. Die spezifische Ladung beim Laden/Entladen hängt von der angelegten Stromdichte ab. Je größer die Stromdichte, umso kleiner ist die spezifische Ladung. Hier wurde jeweils mit einer Stromdichte von 10 $\mu A/cm^2$ geladen und entladen, weil dabei die höchste Coulomb-Effizienz erreicht wurde. Die spezifische Ladung der Schichten kann somit aus den Ladekurven ermittelt werden. Die Ladekurven von Fe-MEPE (35,0 mM) und BSMEPE-4B sind in **Figur 11** zu sehen; Die Ladekurven von BSMEPE-3 und BSMEPE-5 wurden ebenfalls vermessen; sie zeigen Kurven, die auf ein identisches Verhalten schließen lassen.

F-III) Coulomb-Effizienz

Die Coulomb Effizienz beschreibt das Verhältnis von Entlade- zu Ladekapazität, das im Idealfall 1 ist. Dadurch lassen sich Aussagen treffen, bei welchen Stromdichten der Schaltvorgang reversibel verläuft. Sowohl bei den Fe-MEPE- als auch bei den Basisharzsystem/Fe-MEPE-Schichten ist die Coulomb Effizienz bei Stromdichten von 10 bis 100 $\mu A/cm^2$ am höchsten (> 0,95) und der Schaltvorgang sehr reversibel, wie sich aus den **Figur 12** ergibt. Für die Untersuchungen wurde das gleiche Material verwendet wie für die Bestimmung der Ladekurven; dargestellt sind nur die Kurven für die Materialien Fe-MEPE (35,0 mM) und BSMEPE-4B; die Kurven für die übrigen Materialien sind vergleichbar.

F-IV) Selbstentladung

Der Memory-Effekt bewirkt, dass lediglich beim Schaltvorgang Strom verbraucht wird. Dieser ist bei den Basisharsystem/Fe-MEPE-Schichten teilweise größer als bei reinen Fe-MEPE-Schichten, d. h. der geschaltete, farblose Zustand kann hier länger aufrechterhalten werden. Somit kann man durch Messen der Selbstentladung zeigen, wie lang der geschaltete Zustand aufrechterhalten wird, wenn man die Spannung ausschaltet. Der Ladungszustand wurde nach jeweils 2 h und 5 h gemessen. Je langsamer die Selbstentladung ist, desto größer ist der Memory-Effekt. **Figur 2** zeigt das Ausmaß der Selbstentladung von Fe-MEPE (35,0 mM) im Vergleich zu BSMEPE-2A jeweils nach 2 und nach 5 Stunden.

G) Langzeitstabilität

Für den Einsatz von elektrochromen Materialien in Fenstern ist natürlich auch die Langzeitstabilität des Schaltvorgangs sehr wichtig. Die Schaltbarkeit von Basisharzsystem/Fe-MEPE-Schichten (BSMEPE-4) bleibt auch über 1000 Schaltzyklen erhalten. Die spezifische Ladung und die Coulomb-Effizienz der Schichten nehmen kaum ab, wie die Erfinder anhand der Materialien BSMEPE-4A, -4C und -4E feststellen konnten.

H) Temperaturstabilität

Ein weiteres Kriterium für den Einsatz in elektrochromen Zellen ist die Beständigkeit bei höheren Temperaturen. Dies wird durch die Einbindung in eine hybride Polymermatrix im Vergleich zur reinen MEPE-Schicht deutlich verbessert. Zur Untersuchung der Temperaturstabilität wurden die Basisharzsystem/Fe-MEPE-Schichten beginnend bei 80°C in Schritten von 10°C Temperatursteigerung bis 180°C jeweils 1h getempert, und von jedem Zustand wurde ein UV-Vis-Spektrum aufgenommen. Der Auftrag der maximalen Transmission der MLCT-Bande in Abhängigkeit der Temperatur wurde für eines der Systeme BSMEPE-1, BSMEPE-2, BSMEPE-3, BSMEPE-4 und BSMEPE-5 bereits in **Figur 3** gezeigt. Dabei wird deutlich: BSMEPE-Schichten sind temperaturstabil. Sie verändern ihr optisches Verhalten bei einem Aufheizen bis zu 180°C nur ganz unwesentlich, ganz anders als das nicht stabilisierte Fe-MEPE.

U.a. anhand der verschiedenen Varianten von BSMEPE-4 konnten die Erfinder die Variationsbreite der Systeme mit einem Material, aber unterschiedlichen Mengenverhältnissen von Fe-MEPE zu Einbettungsmaterial feststellen. Daraus lässt sich ableiten, dass das Stoffmengenverhältnis von Basisharzsystem zu Fe-MEPE einen deutlichen Einfluss auf die Temperaturstabilität hat. Mit zunehmendem Verhältnis nimmt auch die Stabilität der Schichten zu. Aber ab einem Verhältnis von 3:1 bleiben die Werte in etwa konstant und es kommt zu keiner weiteren Verbesserung.

Auch nach den mit 10K abgestuften Temperschritten von jeweils 1h zwischen 80°C und 200°C lassen sich die BSMEPE-Schichten noch elektrochemisch schalten und zeigen kaum eine Farbänderung. Dagegen zeigen die getemperten Fe-MEPE-Schichten auch nach Abkühlung auf Raumtemperatur eine irreversible Grünfärbung und sind elektrochemisch nicht mehr reversibel schaltbar. Die spezifische Ladung der getemperten Schichten nimmt aber im Vergleich zu den ungetemperten Schichten deutlich ab. Die Coulomb Effizienz bleibt etwa gleich hoch. Dies wird anhand des Systems BSMEPE-4 in Figur 14 (Cyclovoltammogramm), gezeigt.

K) Vollzellen-Messung

Die spektroelektrochemischen Messungen einer Vollzelle aus Basisharzsystem/Fe-MEPE (Arbeitselektrode) gegen $TiVO_x$ (Gegenelektrode) sind in den Figuren 15 und 16 zu sehen. Als Elektrolyt wurde $LiClO_4$ in PC mit 20 wt% PMMA verwendet. Eine Referenzelektrode wurde nicht eingesetzt. Die Ergebnisse des Cyclovoltammogramms **(Figur 15)** und der Absorptions-Messung **(Figur 16)** zeigen anhand von BSMEPE-1A, dass die Zelle reversibel von blau nach farblos schaltet. Die Spannung beträgt etwa 1,5 V. Die beiden Peaks für die Oxidation und Reduktion von Fe-MEPE sind im CV deutlich sichtbar. Die Erfinder konnten feststellen, dass die Schaltbarkeit auch über 1000 Schaltzyklen erhalten bleibt.

In den Abbildungen zeigen:

Figur 1: den schematischen Aufbau einer elektrochromen Zelle

Figur 2: den Vergleich der Geschwindigkeit der Selbstentladung von Fe-MEPE (35,0 mM) und BSMEME-2A

Figur 3: das Transmissionsverhalten von Fe-MEPE bei steigenden Temperaturen

Figur 4: das Temperaturverhalten von Fe-MEPE (35,0 mM) und einiger BSMEPE-Zusammensetzungen, jeweils auf FTO-Glas

Figur 5: die Absorption unterschiedlicher Fe-MEPE-Lösungen: Die acht dargestellten Punkte ergeben sich bei der Untersuchung von vier verschiedenen Lösungen mit jeweils anderen Konzentrationen (14,0 mM, 21,0 mM, 28,0 mM und 35,0 mM) in Ethanol, wobei jede dieser Lösungen einmal bei einer Ziehgeschwindigkeit von 50 mm/min und einmal bei einer Ziehgeschwindigkeit von 100 mm/min aufgetragen worden war Daraus ergibt sich, dass die Schichtdicke durch die Parameter Konzentration und Ziehgeschwindigkeit bestimmt wird. Die Absorption ist in willkürlichen Einheiten aufgetragen; es lässt sich daraus errechnen, dass eine Absorption von 2.3 einer Transparenz von 10% entspricht.

Figur 6: die Absorptionsspektren von Fe-MEPE und einer erfindungsgemäß einsetzbaren BSMEPE-Zusammensetzung

Figur 7: das Prinzip einer elektrochromen Zelle mit einer zweiten Elektrode aus Preußisch Blau

Figur 8: das Prinzip der Farbveränderung bei An- und Abschaltung anhand einer elektrochromen Zelle mit einer zweiten Elektrode

Figur 9: REM-Aufnahmen der Bruchkante einer Schicht aus Fe-MEPE (35,0 mM) (links) und der Bruchkante einer Schicht aus BSMEPE-4D, jeweils auf FTO-Glas

Figur10: Cyclovoltammogramm von Fe-MEPE (35,0 mM) und BSMEPE-4B

Figur 11: Ladekurven von Fe-MEPE (35,0 mM) und BSMEPE-4B

Figur 12: graphische Darstellungen der Coulomb-Effizienz von Fe-MEPE (35,0 mM) und BSMEPE-4B

Figur 13: die spezifische Ladung von BSMEPE-4 in Abhängigkeit von der Anzahl der Schaltzyklen

Figur 14: einen Vergleich der Cyclovoltammogramme von getemperten und ungetemperten BSMEPE-Materialien

Figur 15: die Reversibilität des Schaltvorgangs einer Vollzelle mit BSMEPE-1A als Arbeitselektrode anhand eines Cyclovoltammogramms

Figur 16: die Schaltbarkeit einer Vollzelle mit BSMEPE-1A als Arbeitselektrode über 1000 Schaltzyklen hinweg

## Patentansprüche

**1.** Material für die Arbeitselektrode einer elektrochromen Zelle, umfassend
eine Metall-Komplexverbindung, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht, und
ein Einbettungsmaterial, das Hydroxygruppen sowie nichtaromatische, organisch polymerisierbare C=C-Doppelbindungen aufweist.

**2.** Material nach Anspruch 1, wobei das Einbettungsmaterial zu mindestens 70 Gew.-%, bezogen auf das Einbettungsmaterial, aus einem organischen Material und/oder aus einem Kieselsäure(hetero)polykondensat besteht.

3. Material nach Anspruch 2, wobei das Einbettungsmaterial entweder

(i) Einheiten aufweist, die ausgewählt sind unter

(a) organischen Verbindungen, in denen jedes Molekül mindestens eine Hydroxygruppe und mindestens eine organisch polymerisierbare C=C-Doppelbindung trägt,
und/oder
(b) über Kohlenstoff an Siliciumatome gebundenen Resten eines organisch modifizierten Kieselsäure(hetero)polykondensats, wobei jeder dieser Reste mindestens eine Hydroxygruppe und mindestens eine organisch polymerisierbare C=C-Doppelbindung trägt,

und/oder
(ii) ein Gemisch aus mindestens zwei verschiedenen Einheiten aufweist, wobei eine erste Einheit mit mindestens einer Hydroxygruppe substituiert ist und eine zweite Einheit mindestens eine organisch polymerisierbare C=C-Doppelbindung trägt, mit der Maßgabe, dass es sich bei diesen Einheiten entweder um über Kohlenstoff an Siliciumatome gebundene Reste eines organisch modifizierten Kieselsäure(hetero)polykondensats und/oder um organische Verbindungen und/oder um unterschiedliche (Monomer-)Einheiten polymerer organischer Verbindungen handelt.

4. Material nach einem der Ansprüche 1 bis 3, worin die Einheiten des Einbettungsmaterials Acryl- und/oder Methacrylgruppen aufweisen, vorzugweise ausgewählt unter Acrylat-, Methacrylat-, Thioacrylat-, Thiomethacrylat-, Acrylamid- und Methacrylamid-Gruppen.

5. Material nach einem der voranstehenden Ansprüche, worin die Metall-Komplexverbindung der Arbeitselektrode mindestens einen chelatisierenden Komplexliganden aufweist, der Metallatome über zwei oder mehr Stickstoff-, Sauerstoff- oder Schwefelatome binden kann, wobei diese Metallatome vorzugsweise ausgewählt sind unter Cr, Mn, Fe, Co, Ni, Cu, Mo, Ru, Rh, Pd oder einer Mischung davon und besonders bevorzugt Eisenatome sind.

6. Material nach Anspruch 5, worin der mindestens eine chelatisierende Kompexligand ausgewählt ist unter unsubstituiertem oder mit OH oder Halogen substituiertem Bis-(benzimidazolyl)pyridin, unsubstituiertem oder mit OH oder Halogen substituiertem Bis-(benzoxazolyl)pyridin, unsubstituiertem oder mit Halogen, Alkyl oder Aminophenyl substituiertem Terpyridin sowie Liganden, die zwei über eine Einfachbindung oder über einen zweibindigen Spacer, insbesondere über einen kohlenwasserstoffhaltigen Rest miteinander verbundene, unsubstituierte oder mit Halogen, Alkyl oder Aminophenyl substituierte Terpyridinreste enthalten.

7. Material nach einem der voranstehenden Ansprüche, worin das Einbettungsmaterial ein Kieselsäurepolykondensat ist, das Acryl- oder Methacrylgruppen trägt.

8. Material nach Anspruch 7, worin jedes Siliciumatom des Kieselsäurepolykondensats oder mehr als 50 Mol-% davon jeweils eine über Kohlenstoff an Silicium gebundene Gruppe aufweist, wobei entweder jede dieser Gruppen eine Methacrylgruppe und eine Hydroxygruppe trägt oder ein erster Teil dieser Gruppen zwei Hydroxygruppen trägt, ein zweiter Teil dieser Gruppen eine Methacrylgruppe und eine Hydroxygruppe trägt und gegebenenfalls ein dritter Teil dieser Gruppen zwei Methacrylgruppen trägt.

9. Material nach einem der Ansprüche 1 bis 7, worin das Einbettungsmaterial aus einer oder mehreren organischen Verbindungen besteht, worin jedes Molekül durchschnittlich mindestens zwei Acryl- oder Methacrylgruppen und durchschnittlich mindestens zwei Hydroxygruppen aufweist.

10. Material nach Anspruch 9, worin das Einbettungsmaterial das Produkt der Umsetzung eines Tri-, Tetra- oder Pentaacrylats oder -methacrylats mit einem Dihydroxythiol oder einem Dihydroxyamin ist.

11. Elektrochrome Zelle, umfassend
ein erstes Substrat, das mit einer leitenden Beschichtung versehen ist,
ein zweites, transparentes Substrat, das mit einer leitenden Beschichtung versehen ist, eine Arbeitselektrode, die in Kontakt mit der leitenden Beschichtung eines dieser beiden Substrate steht, und
ein Elektrolytmaterial, das sich zwischen der Arbeitselektrode und dem anderen dieser beiden Substrat befindet und bewegliche Kationen in Form eines dissoziierbaren Metallsalzes enthält,

**dadurch gekennzeichnet, dass** die Arbeitselektrode aus einem Material nach einem der Ansprüche 1 bis 10 besteht oder dieses umfasst.

**12.** Elektrochrome Zelle nach Anspruch 11, worin sich zwischen dem Elektrolytmaterial und der leitenden Beschichtung des anderen Substrats eine zweite Elektrode befindet, die in der Lage ist, Kationen des Elektrolytmaterials zu interkalieren und/oder eine Redoxreaktion einzugehen.

**13.** Elektrochrome Zelle nach Anspruch 12, worin das Material der zweiten Elektrode beim Übergang vom reduzierten in den oxidierten Zustand einer Farbvertiefung unterliegt.

**14.** Elektrochrome Zelle nach Anspruch 13 worin das Material der zweiten Elektrode Preußisch Blau oder ein Derivat von Preußisch Blau aufweist.

**15.** Elektrochrome Zelle nach Anspruch 14, worin das Material der zweiten Elektrode ein Metalloxid ist, das in der Lage ist, Lithiumionen zu interkalieren und vorzugsweise Titan-Vanadium-Oxid ist.

## Claims

**1.** A material for the working electrode of an electrochromic cell, comprising:

a metal complex compound capable of undergoing a redox reaction,
wherein the transition from the oxidized state to the reduced state is accompanied by a colour increase and the transition from the reduced state to the oxidized state is accompanied by a corresponding colour decrease, and
an embedding material comprising hydroxyl groups and non-aromatic, organic polymerizable C=C double bonds.

**2.** The material according to claim 1, wherein the embedding material consists of at least 70 % by weight of an organic material and/or of a silicic acid (hetero)poly condensate, in relation to the embedding material.

**3.** The material according to claim 2, wherein the embedding material comprises either

(i) units selected from among

(a) organic compounds, wherein each molecule carries at least one hydroxyl group and at least one organic polymerizable C=C double bond, and/or
(b) residues of an organic modified silicic acid (hetero)polycondensate bound via carbon to silicon atoms, wherein each of said residues carries at least one hydroxyl group and at least one organic polymerizable C=C double bond,

and/or
(ii) a mixture of at least two different units, wherein a first unit is substituted with at least one hydroxyl group and a second unit carries at least one organic polymerizable C=C double bond, provided these units are either residues of an organic modified silicic acid (hetero)polycondensate bound via carbon to silicon atoms and/or organic compounds and/or different (monomer) units of polymeric organic compounds.

**4.** The material according to any one of claims 1 to 3, wherein the units of the embedding material comprise acrylic and/or methacrylic groups which are preferably selected from among acrylate groups, methacrylate groups, thioacrylate groups, thiomethacrylate group, acrylamide groups and methacrylamide groups.

**5.** The material according to one of the preceding claims, wherein the metal complex compound of said working electrode comprises at least one chelating complex ligand capable of binding metal atoms via two or more nitrogen atoms, oxygen atoms or sulfur atoms, wherein these metals are preferably selected from among Cr, Mn, Fe, Co, Ni, Cu, Mo, Ru, Rh, Pd or a mixture thereof, and are preferably iron atoms.

**6.** The material according to claim 5, wherein said at least one chelating complex ligand is selected from among unsubstituted bis-(benzimidazolyl)pyridine or bis-(benzimidazolyl)pyridine substituted with OH or a halogen, unsubstituted bis-(benzoxazolyl)pyridine or bis-(benzoxazolyl)pyridine substituted with OH or a halogen, unsubstituted terpyridine or terpyridine substituted with halogen, alkyl or aminophenyl, as well as ligands comprising two unsubstituted terpyridine residues or terpyridine residues substituted with halogen, alkyl or aminophenyl, bonded to each other via a single bond or via a bivalent spacer, in a particular via hydrocarbon-containing residue.

**7.** The material according to one of the preceding claims, wherein the embedding material is a silicic acid polycondensate carrying acrylic groups or methacrylic groups.

**8.** The material according to claim 7, wherein each silicon atom of the silicic acid polycondensate or more than 50 mole % thereof comprises a group bound via carbon to silicon, wherein either each of these groups carries a methacrylic group and a hydroxyl group, or a first part of these groups carries two hydroxyl groups, a second part of these groups carries a methacrylic group and a hydroxyl group, and optionally a third part of these groups carries two methacrylic groups.

**9.** A material according one of claims 1 to 7, wherein said embedding material consists of one or more organic compounds, wherein each molecule on average has at least two acrylic or methacrylic groups and on average two hydroxyl groups.

**10.** A material according to claim 9, wherein said embedding material is the reaction product of tri, tetra or pentaacrylate or tri, tetra or pentamethacrylate with a dihydroxythiol or a dihydroxyamine.

**11.** Electrochromic cell, comprising:

a first substrate provided with a conductive coating,
a second, transparent substrate provided with a conductive coating,
a working electrode in contact with the conductive coating of one of these two substrates, and
an electrolyte material between the working electrode and the other one of these two substrates and contains mobile cations in the form of a dissociating metal salt,
**characterized in that** the working electrode consists of a material according to one of claims 1 to 10 or comprises that material.

**12.** Electrochromic cell according to claim 11, wherein a second electrode is arranged between said electrolyte material and the conductive coating of said other substrate, capable of intercalating cations of said electrolyte material and/or of undergoing a redox reaction.

**13.** Electrochromic cell according to claim 12, wherein the material of said second electrode is subjected to a colour increase in the transition from the reduced state to the oxidized state.

**14.** Electrochromic cell according to claim 13, wherein the material of the second electrode comprises Prussian Blue or a derivative of Prussian Blue.

**15.** Electrochromic cell according to claim 14, wherein the material of said second electrode is a metal oxide capable of intercalating lithium ions, and preferably is titanium vanadium oxide.

**Revendications**

**1.** Matériau pour l'électrode de travail d'une cellule électrochrome, comprenant
un composé complexe métallique, qui est en mesure de participer à une réaction d'oxydoréduction, dans lequel le passage de l'état oxydé à l'état réduit s'accompagne d'une intensification de la couleur et le passage de l'état réduit à l'état oxydé s'accompagne d'un affaiblissement de la couleur, et
un matériau d'enrobage, qui présente des groupes hydroxy ainsi que des liaisons doubles C=C non aromatiques organiquement polymérisables.

**2.** Matériau selon la revendication 1, dans lequel le matériau d'enrobage se compose à au moins 70 % en poids, rapportés au matériau d'enrobage, d'un matériau organique et/ou d'un (hétéro)polycondensat d'acide silicique.

**3.** Matériau selon la revendication 2, dans lequel le matériau d'enrobage
ou bien

(i) présente des unités, qui sont choisies parmi

(a) des composés organiques, dans lesquels chaque molécule porte au moins un groupe hydroxy et au moins une liaison double C=C organiquement polymérisable,
et/ou
(b) des radicaux liés à des atomes de silicium par du carbone d'un (hétéro)polycondensat d'acide silicique organiquement modifié, dans lequel chacun de ces radicaux porte au moins un groupe hydroxy et au moins une liaison double C=C organiquement polymérisable,
et/ou

(ii) présente un mélange d'au moins deux unités différentes, dans lequel une première unité est substituée avec au moins un groupe hydroxy et une deuxième unité porte au moins une liaison double C=C organiquement polymérisable, avec la condition que ces unités soient ou bien des radicaux liés à des atomes de silicium par du carbone d'un (hétéro)polycondensat d'acide silicique organiquement modifié et/ou des composés organiques et/ou des unités (monomères) différentes de composants organiques polymères.

**4.** Matériau selon l'une quelconque des revendications 1 à 3, dans lequel les unités du matériau d'enrobage présentent des groupes acryle et/ou méthacryle, de préférence choisis parmi des groupes acrylate, méthacrylate, thioacrylate, thiométhacrylate, acrylamide et méthacrylamide.

**5.** Matériau selon l'une quelconque des revendications précédentes, dans lequel le composé complexe métallique de l'électrode de travail présente au moins un ligand complexe chélateur, qui peut lier des atomes métalliques par deux ou plusieurs atomes d'azote, d'oxygène ou de soufre, dans lequel ces atomes métalliques sont de préférence choisis parmi Cr, Mn, Fe, Co, Ni, Cu, Mo, Ru, Rh, Pd ou un mélange de ceux-ci et sont de façon particulièrement préférée de atomes de fer.

**6.** Matériau selon la revendication 5, dans lequel ledit au moins un ligand complexe chélateur est choisi parmi la bis(benzimidazolyl)pyridine non substituée ou substituée avec OH ou un halogène, la bis(benzoxazolyl) pyridine non substituée ou substituée avec OH ou un halogène, la terpyridine non substituée ou substituée avec un halogène, un alkyle ou un aminophényle, ainsi que des ligands qui contiennent des radicaux de terpyridine non substitués ou substitués avec un halogène, un alkyle ou un aminophényle, reliés l'un à l'autre par une liaison simple ou par un espaceur divalent, en particulier par un radical hydrocarboné.

**7.** Matériau selon l'une quelconque des revendications précédentes, dans lequel le matériau d'enrobage est un polycondensat d'acide silicique, qui porte des groupes acryle ou méthacryle.

**8.** Matériau selon la revendication 7, dans lequel chaque atome de silicium du polycondensat d'acide silicique ou plus de 50 % molaires de ceux-ci présente(nt) respectivement un groupe lié au silicium par du carbone, dans lequel soit chacun de ces groupes porte un groupe méthacryle et un groupe hydroxy soit une première partie de ces groupes porte deux groupes hydroxy, une deuxième partie de ces groupes porte un groupe méthacryle et un groupe hydroxy et éventuellement une troisième partie de ces groupes porte deux groupes méthacryle.

**9.** Matériau selon l'une quelconque des revendications 1 à 7, dans lequel le matériau d'enrobage se compose d'un ou de plusieurs composés organiques, dans lequel chaque molécule présente en moyenne au moins deux groupes acryle ou méthacryle et en moyenne au moins deux groupes hydroxy.

**10.** Matériau selon la revendication 9, dans lequel le matériau d'enrobage est le produit de la réaction d'un tri-, tétra- ou pentaacrylate ou -méthacrylate avec un dihydroxythiol ou une dihydroxyamine.

**11.** Cellule électrochrome, comprenant
un premier substrat, qui est muni d'un revêtement conducteur,
un deuxième substrat transparent, qui est muni d'un revêtement conducteur,
une électrode de travail, qui est en contact avec le revêtement conducteur d'un de ces deux substrats, et
un matériau d'électrolyte, qui se trouve entre l'électrode de travail et l'autre de ces deux substrats et qui contient des cations mobiles sous la forme d'un sel métallique dissociable,
**caractérisée en ce que** l'électrode de travail se compose d'un matériau selon l'une quelconque des revendications 1 à 10 ou en contient.

**12.** Cellule électrochrome selon la revendication 11, dans laquelle il se trouve entre le matériau d'électrolyte et le revêtement conducteur de l'autre substrat une deuxième électrode, qui est en mesure d'intercaler des cations du matériau d'électrolyte et/ou de participer à une réaction d'oxydoréduction.

**13.** Cellule électrochrome selon la revendication 12, dans laquelle le matériau de la deuxième électrode subit une intensification de la couleur lors du passage de l'état réduit à l'état oxydé.

**14.** Cellule électrochrome selon la revendication 13, dans laquelle le matériau de l'électrode présente le bleu de Prusse ou un dérivé du bleu de Prusse.

**15.** Cellule électrochrome selon la revendication 14, dans laquelle le matériau de la deuxième électrode est un oxyde métallique, qui est en mesure d'intercaler des ions lithium et qui est de préférence un oxyde de titane et vanadium.

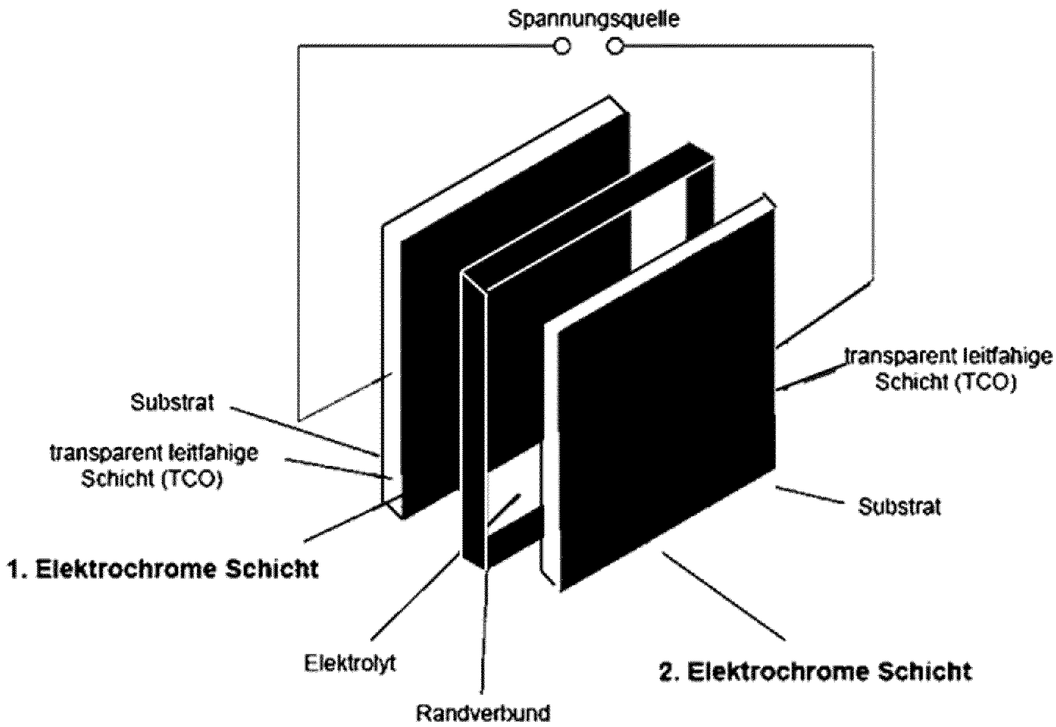


Figur 1

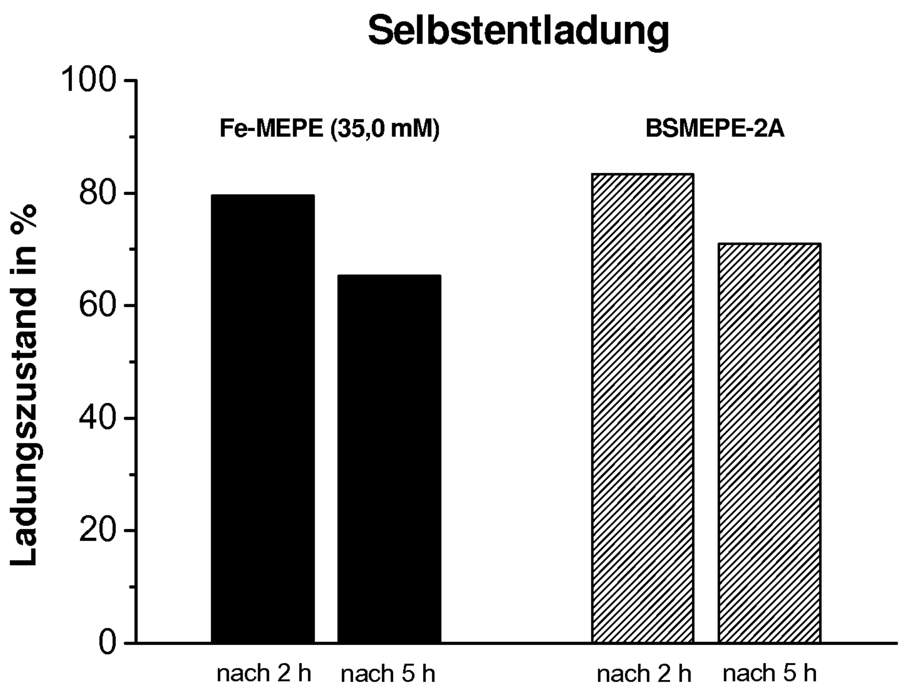


Figur 2

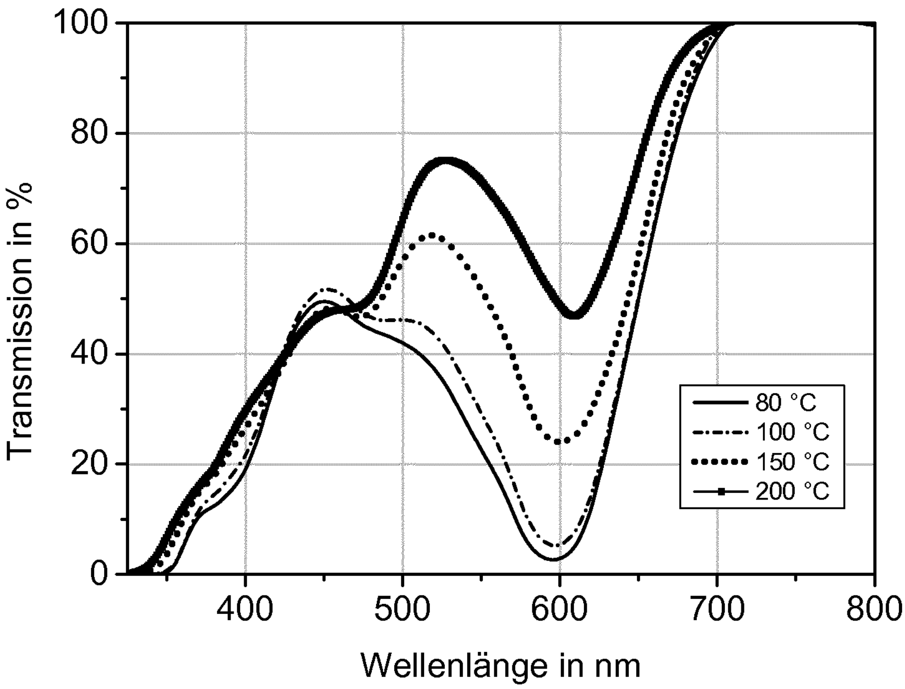


Figur 3

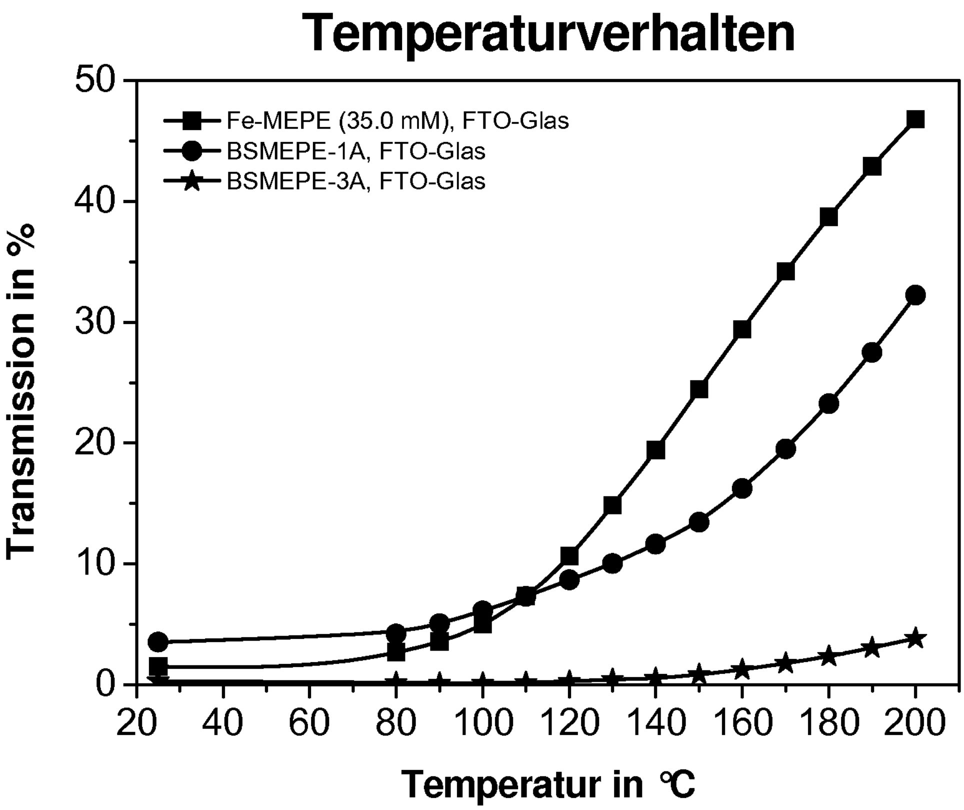


Figur 4

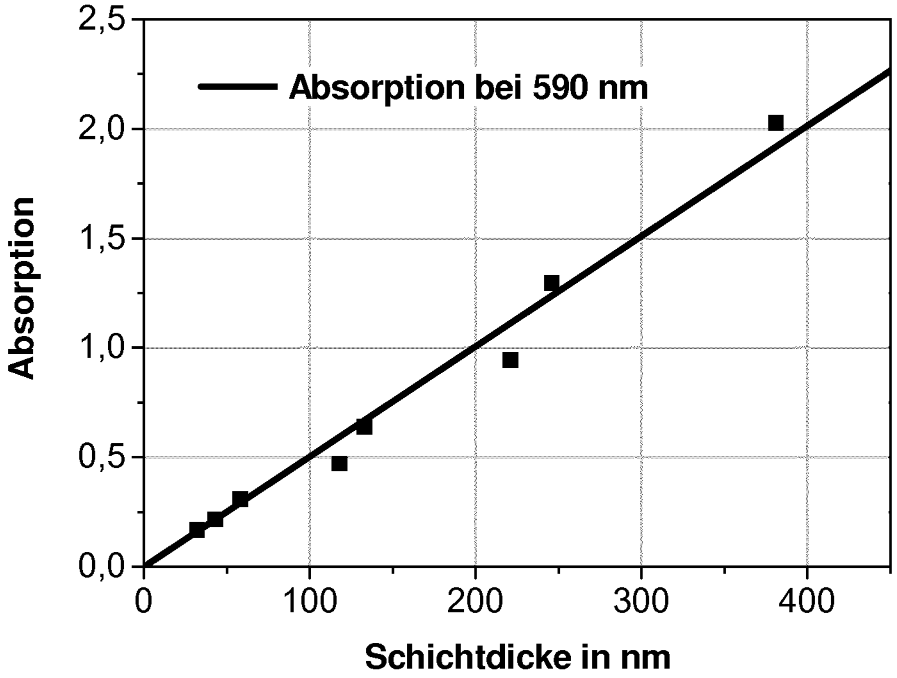


Figur 5

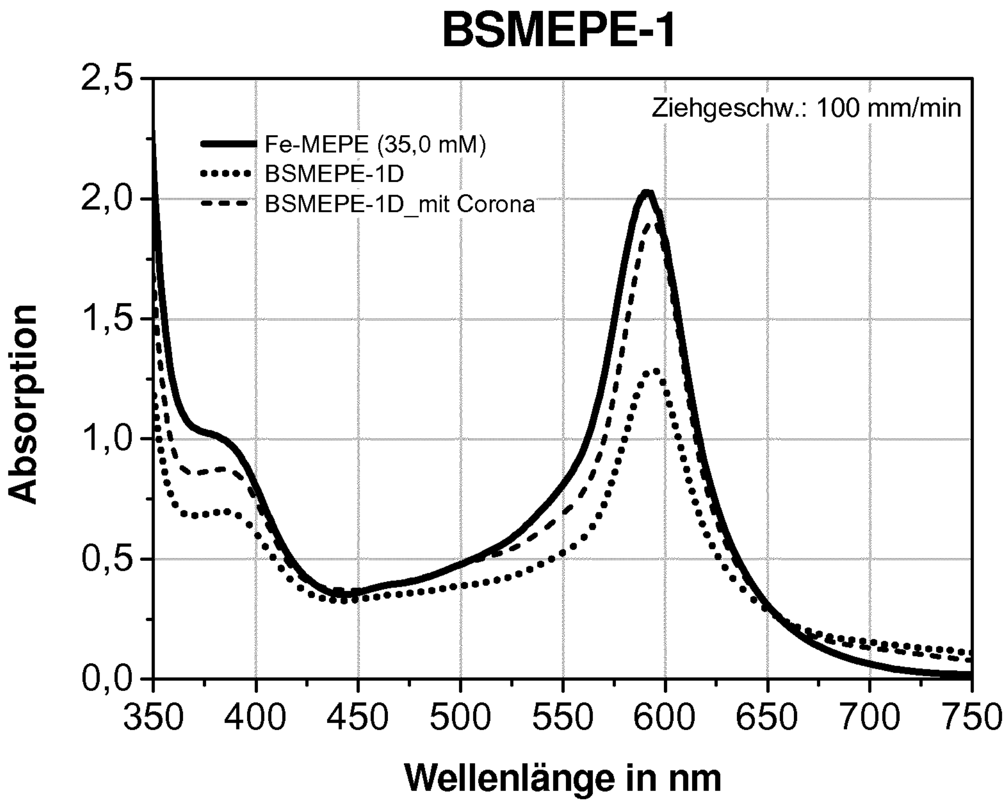


Figur 6

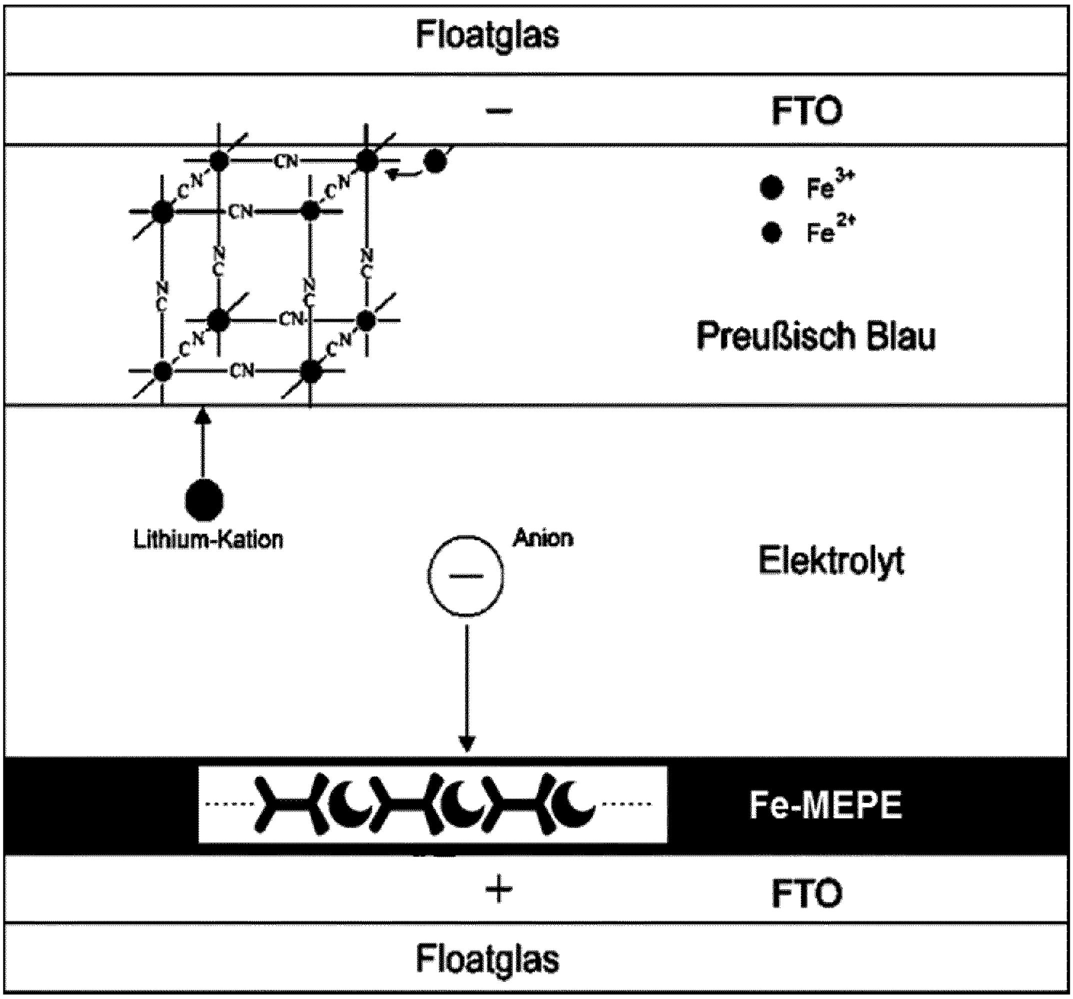
Floatglas
–
FTO
CN
CN
CN
CN
$Fe^{3+}$
$Fe^{2+}$
Preußisch Blau
Lithium-Kation
Anion
Elektrolyt
Fe-MEPE
+
FTO
Floatglas

Figur 7

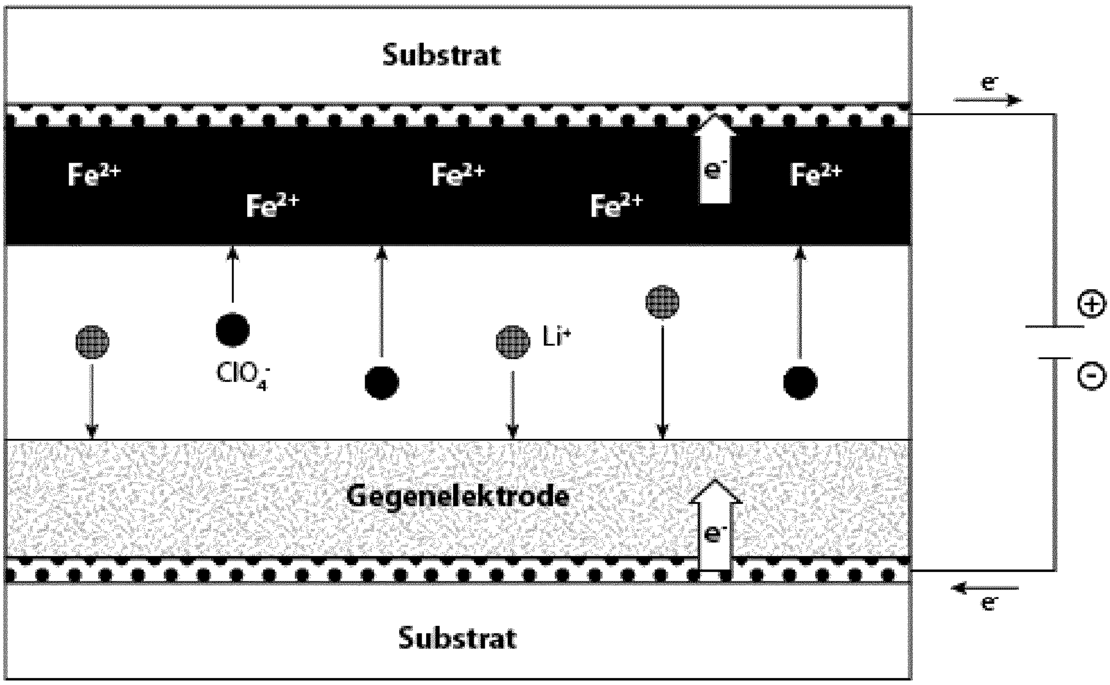


0 V (blauer Zustand)

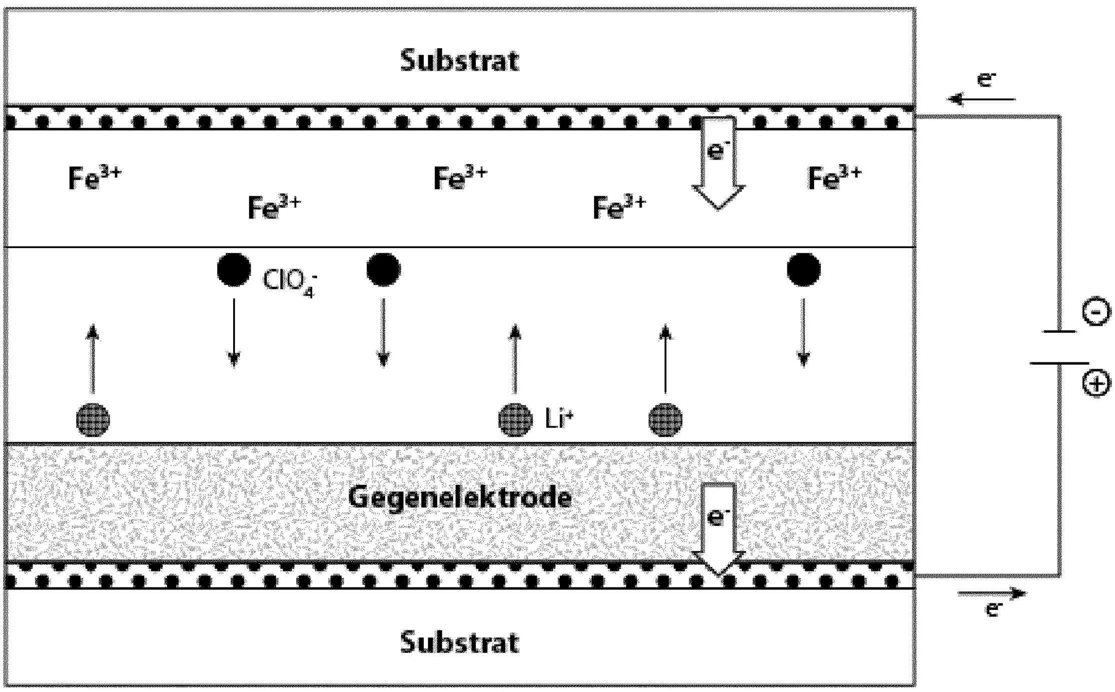


Figur 8

1,6 V (farbloser Zustand)

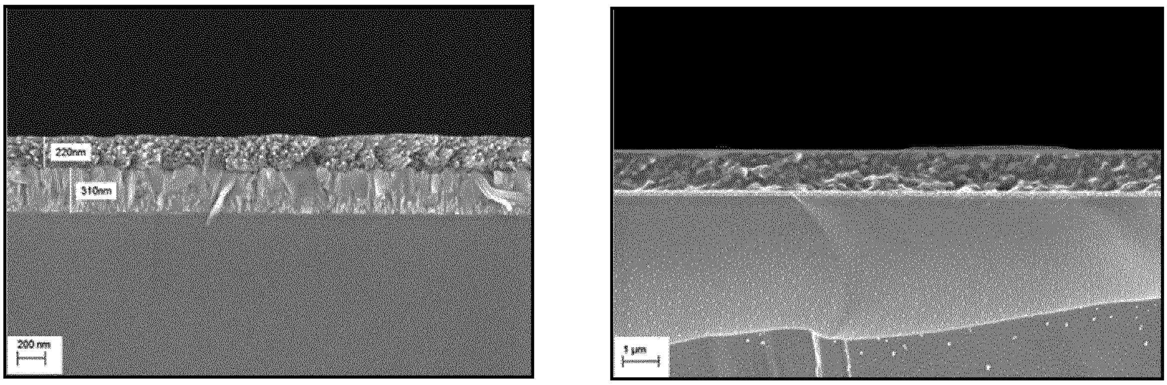


Figur 9

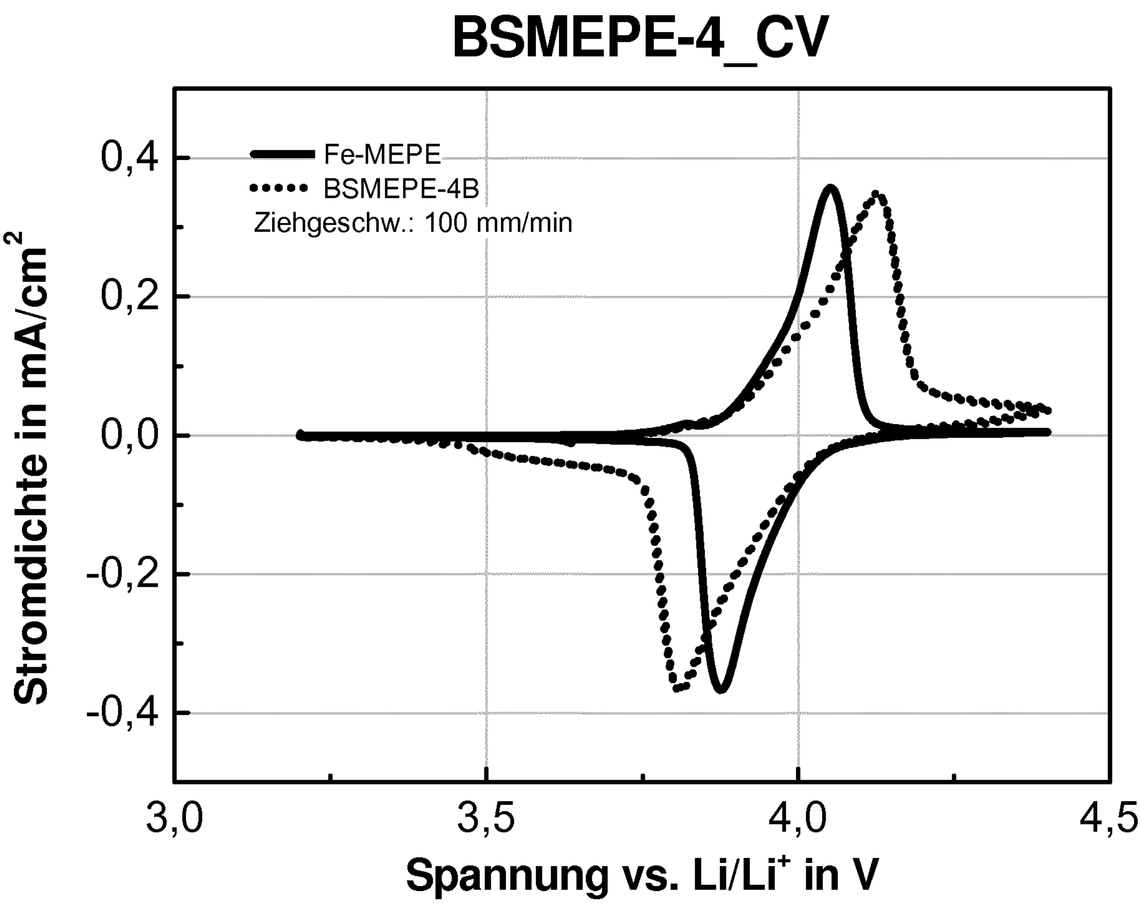


Figur 10

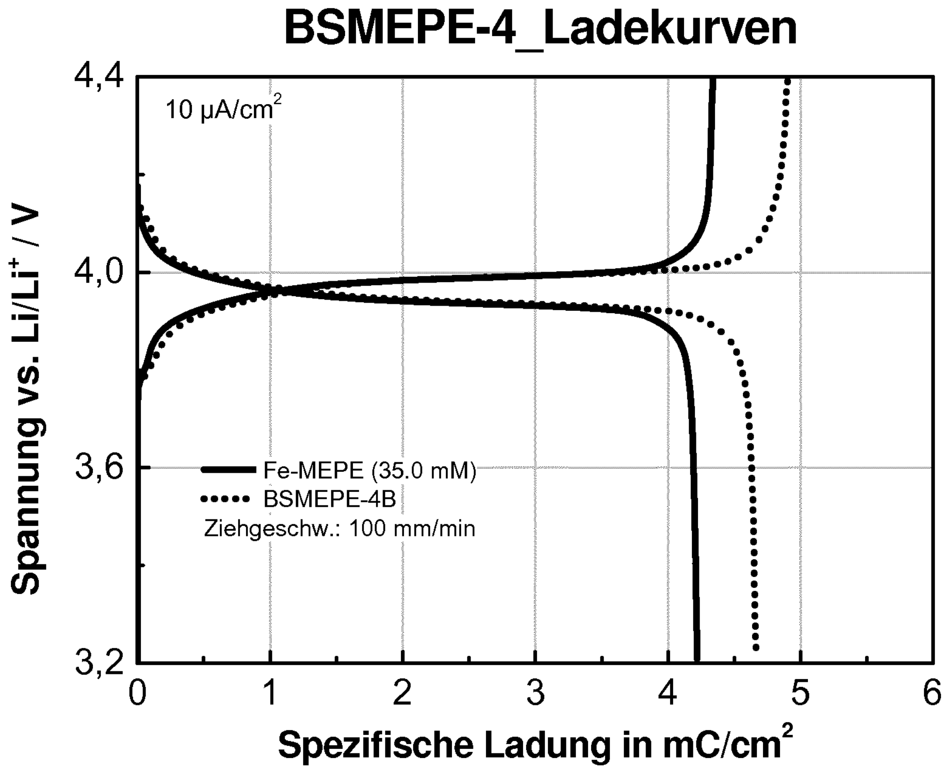


Figur 11

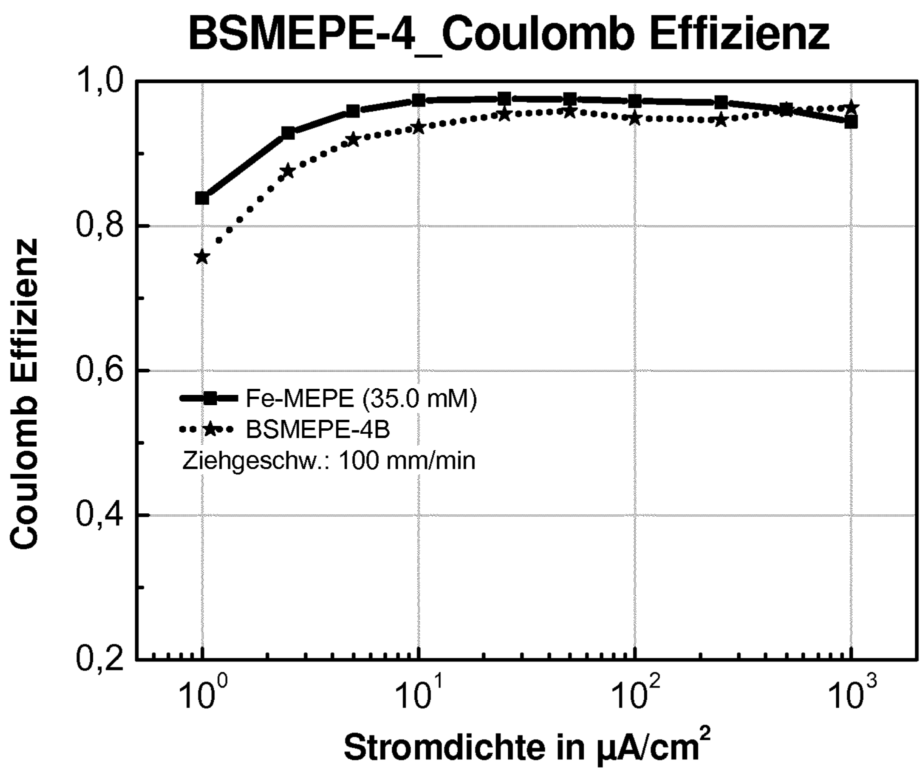


Figur 12

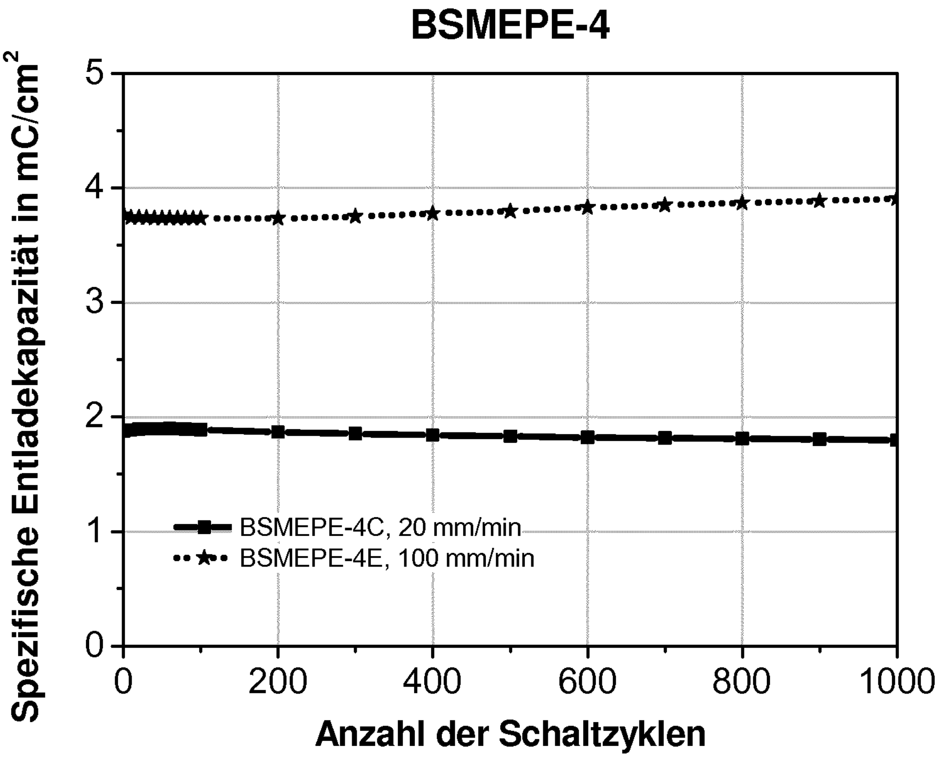


Figur 13

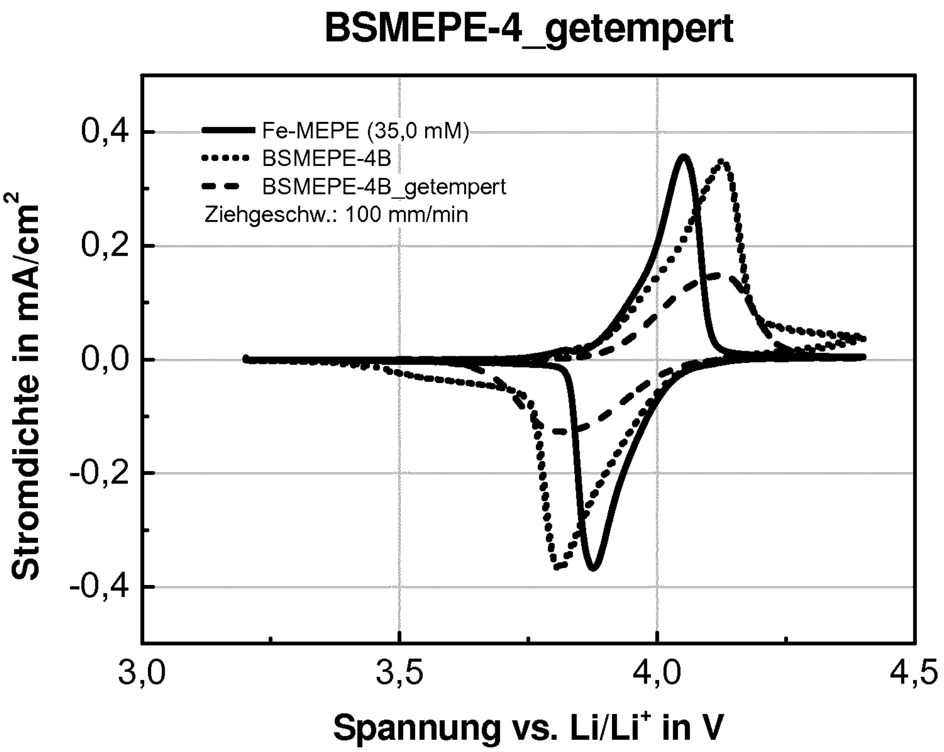


Figur 14

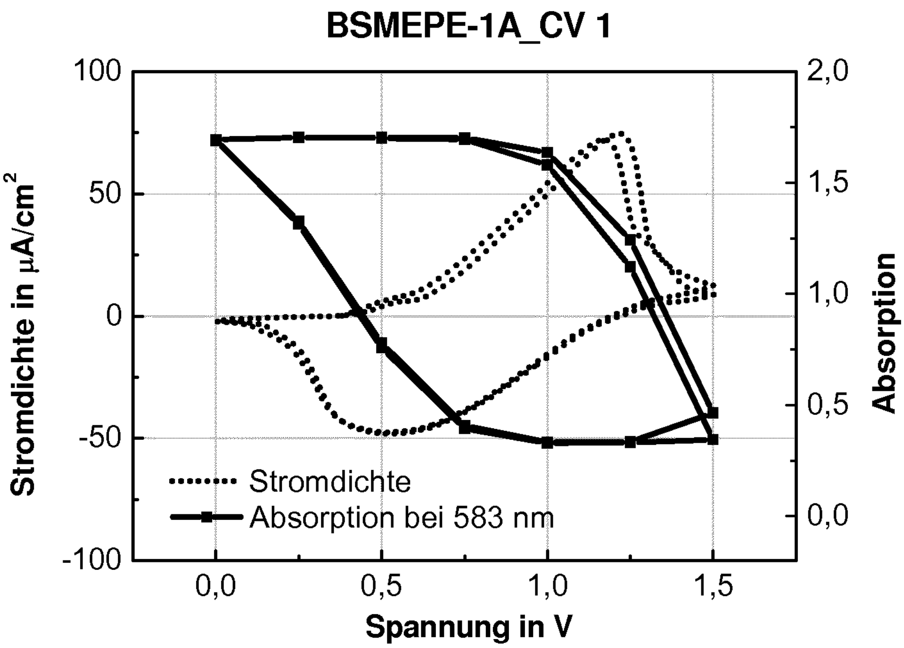


Figur 15

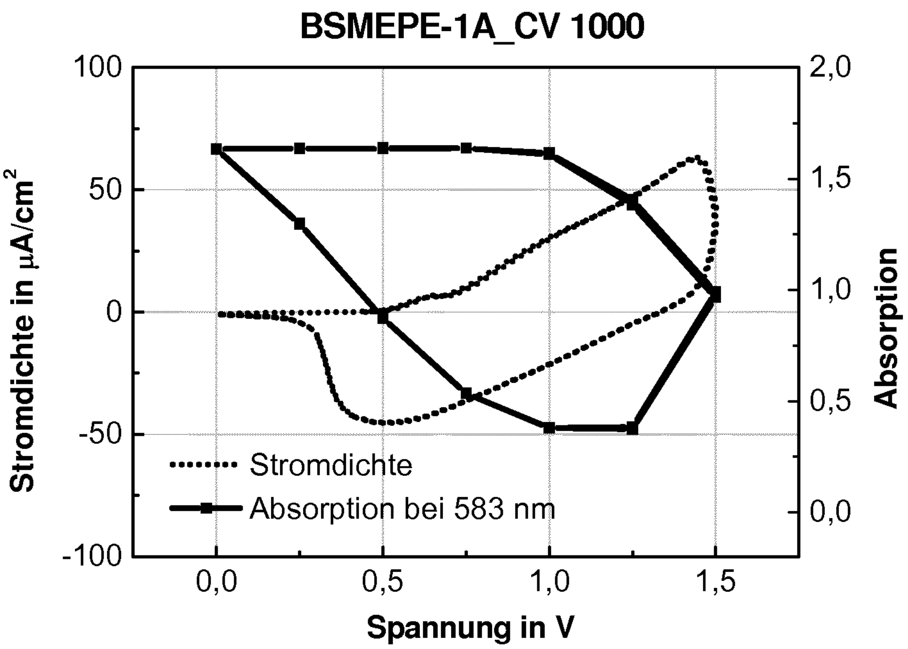


Figur 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2444839 A1
- EP 2105787 A
- US 2009270589 A1
- WO 2008081762 A1
- WO 2008143324 A1
- WO 2011096386 A1
- WO 2011096386 A
- WO 2008081762 A
- US 20090270589 A
- DE 4011044 A1
- DE 4416857 C1
- DE 19910895 A1
- DE 10349766 A1
- DE 19627198
- EP 1874847 B1
- EP 1914260 A1
- WO 2013041723 A


### In der Beschreibung aufgeführte Nicht-Patentliteratur


- **S. HEUSING et al.** *Thin Solid Films,* 2006, vol. 502, 240-245
- **A. KRAFT et al.** *Solar Energy Materials and Solar Cells,* 2006, vol. 90, 469-476
- **R. BEATENS et al.** *Solar Energy Materials & Solar Cells,* 2010, vol. 94, 87-105
- **E.C. CONSTABLE et al.** *J. Chem. Soc. Dalton Trans.,* 1992, 3467-3475
- **VON F.S. HAN et al.** *Adv. Mat.,* 2007, vol. 19, 3928-3931